# EUROPEAN PATENT SPECIFICATION

(11) **EP 1 905 861 B1**
(45) Date of publication and mention of the grant of the patent: **16.01.2013**
(21) Application number: 06767730.2
(22) Date of filing: 30.06.2006
(51) Int. Cl.: C23C 8/12, B01J 35/02, B01J 35/06, C02F 1/32, C02F 1/72, C23C 20/08, C23C 28/04, C23C 8/16

(54) **METHOD FOR FORMATION OF ALUMINA COATING FILM, ALUMINA FIBER, AND GAS TREATMENT SYSTEM COMPRISING THE ALUMINA FIBER**
VERFAHREN ZUR BILDUNG EINES ALUMINIUMOXIDBESCHICHTUNGSFILMS, ALUMINIUMOXIDFASER UND GASBEHANDLUNGSSYSTEM, UMFASSEND DIE ALUMINIUMOXIDFASER
PROCEDE POUR LA FORMATION DE FILM DE REVETEMENT D'ALUMINE, FIBRE D'ALUMINE ET SYSTEME DE TRAITEMENT DE GAZ COMPORTANT LA FIBRE D'ALUMINE

(30) Priority: 30.06.2005 JP 2005191172; 20.02.2006 JP 2006043147
(43) Date of publication of application: 02.04.2008
(73) Proprietor: K2R Co., Ltd., Fukuoka, 8070871 (JP); Jastex, Inc., Kanagawa 251-0054 (JP)
(72) Inventor: TANAKA, Kenichiro, Kitakyushu-shi, Fukuoka 8070871 (JP); TANAKA, Licca, Kitakyushu-shi, Fukuoka 8070871 (JP); HARADA, Tsutomu, 2510016 (JP)
(74) Representative: HOFFMANN EITLE
(86) International application number: PCT/JP2006/313152
(87) International publication number: WO 2007/004592

(56) References cited:
- EP-A1- 0 358 309
- WO-A1-98/40534
- WO-A2-02/36844
- DE-A1- 4 139 679
- JP-A- 07 096 202
- JP-A- 10 089 050
- JP-A- 11 279 843
- JP-A- 11 279 843
- JP-A- 62 235 246
- JP-A- 2001 218 820
- JP-A- 2005 163 243
- DAS S ET AL: "NOVEL METHOD OF DEVELOPING OXIDE COATING ON ALUMINUM USING MICROWAVE HEATING" JOURNAL OF MATERIALS SCIENCE LETTERS, CHAPMAN AND HALL LTD. LONDON, GB, vol. 22, no. 22, 15 November 2003 (2003-11-15), pages 1635-1637, XP001199341 ISSN: 0261-8028

## Description

### TECHNICAL FIELD

The present invention relates to a method for forming an alumina coating film.

### BACKGROUND OF THE INVENTION

Conventionally, it has been Know that when pure aluminum or aluminum-based metal such as aluminum alloy is exposed to air under normal temperature, a surface of aluminum-based metal reacts with oxygen in air thus forming a natural oxide film on a surface thereof.

This natural oxide filmismadeof alumina (aluminum oxide) and exhibits advantageous effects such as heat resistance and corrosion resistance. However, only with the natural oxide film, it is difficult for aluminum-based metal to exhibits sufficient heat resistance and sufficient corrosion resistance not only under a high temperature condition but also under a normal environment. Further, to apply coat ing forming such as paint ing to aluminum-based metal, the formation of an oxide film having a larger thickness becomes necessary.

Accordingly, attempts have been made to achieve the enhancement of durability and heat resistance and the enhancement of working performance by imparting the two-layered structure to aluminum-based metal in which an artificial oxide film is formed by further oxidizing a lower layer of the natural oxide film.

As a method for forming the artificial oxide film which constitutes the second layer, a method which uses strong-acid solution and an oxidizing method which uses an anodization technique have been mainly known.

On the other hand, a fiber formed by aluminum-based metal (hereinafter simply referred to as aluminum fiber) exhibits an excellent strength and excellent formability compared to other metal fibers and, at the same time, the aluminum fiber possesses an extremely large film surface area and hence, the aluminum fiber is used as an industrial material or a carrier of a catalyst in broad fields.

Further, if a fiber which is formed by oxidizing a surface of the aluminum fiber with a large film thickness (hereinafter, referred to as alumina fiber) can be formed, dip coating formability is enhanced and hence, it is possible to produce a functional catalytic fiber which carries platinum or the like thereon or it is possible to applyphotocatalytic titania coating which exhibits excellent durability to a surface of the alumina fiber. Accordingly, there has been a demand for the alumina fiber having the larger oxide film thickness.

However, in the treatment of the surface of the aluminum fiber by the method which oxidizes the surface of the aluminum fiber using a strong-acid solution, aluminum is resolved in the strong-acid solution and hence, it is difficult to manufacture the alumina fiber having the oxide film with a large film thickness.

Accordingly, there has been proposed a method which oxidizes an aluminum fiber by heating the aluminum fiber at a temperature of 100 to 400°C in air without using a strong-acid solution (see patent document 1, for example).

However, although the above-mentioned oxidizing method which heats the aluminum fiber at a temperature of 100 to 400°C is effective for oxidizing the aluminum fiber in a non-oxidized state which does not form a natural oxide film, it is difficult to form an oxide film having a large film thickness on the aluminum fiber on which a natural oxide film is already formed.

The reason that such a phenomenon occurs is attributed to a fact that once the natural oxide film is formed, such a natural oxide film interrupts the infiltration of oxygen into a deep portion of the metal fiber and hence, even when the metal fiber is heated at a temperature of 100 to 400°C, the formation of the oxide film advances but slowly.

Further, with respect to the alumina fiber which is prepared by the above-mentioned oxidizing method which heats the alumina fiber at a temperature of 100 to 400°C, when photocatalytic titania coating is applied to a surface of the alumina fiber, it is difficult to sufficiently form a titania thin film and a coated film is peeled off. Accordingly, the alumina fiber lacks property to function as a carrier for forming a photocatalytic titania thin film and, at the same time, the alumina fiber does not posses heat resistance to withstand a heating temperature (approximately 750°C) sufficient for the formation of a film of rutile-type photocatalytic titania fiber.

This implies that a thickness of the oxide film formed on the aluminum fiber is insufficient so that a strengthof bonding between aluminum and the oxide film is insufficient. Since the oxide film having the thickness sufficient as the carrier of photocatalytic titania coating is not formed on the aluminum fiber and hence, the possibility of utilization of the aluminum fiber as the catalytic carrier has been questioned technically.

Accordingly, inventors of the present invention have made researches and developments to enable the formation of an alumina fiber having an oxide film of high quality and with a large thickness on an aluminum fiber which has a surface thereof covered with a natural oxide f i lm, and have achieved the present invention.
[Patent document 1] JP-A-11-279843
In Journal of Materials Science Letters, Vol. 22, 2003, pages 1635-1637, S. Das et al describe a method of developing oxide coatings on aluminium using microwave heating, wherein the coating thickness varies as a function of the microwave exposure time.
JP 10089050 A describes a filter device for exhaust gas which is equipped with alumina mesh parts consisting of Fe-Cr-Al alloy and alumina ceramic mesh parts consisting of yarn of alumina long fibers.

### DISCLOSURE OF THE INVENTION

To overcome the above-mentioned drawbacks, a method for forming an alumina coating film of the present invention, comprises the steps of
preparing an aluminum fiber made of aluminum or aluminum alloy which has a surface thereof covered with a natural oxide film,
forming an artificial oxide film below the natural oxide film by heating the aluminum fiber up to a temperature approximately half of melting point of aluminum while maintaining a temperature gradient of approximately 5°C or less per minute and, thereafter, by maintaining the temperature at approximately half of the melting point for a predetermined time,
wherein the film thickness of the oxide film consisting of the natural oxide film and the artificial oxide film is 5nm or more,
and forming a deep-layer oxide film below the artificial oxide film by heating the aluminum fiber up to a temperature close to the melting point of aluminum and, thereafter, by adjusting a time for holding the aluminum fiber around the temperature corresponding to a desired film thickness,
wherein the film thickness of an oxide film consisting of the natural oxide film, the artificial oxide film and the deep-layer oxide film is 50nm or more.
The present invention is also characterized by the following constitutions.
(1) The deep-layer oxide film is configured to possess heat resistance against a temperature higher than a melting point of aluminum or aluminum alloy.
(2) A deepest-layer oxide film is formed by oxidizing aluminum below the deep layer oxide film by heating the aluminum fiber up to a temperature which exceeds a melting point of the aluminum fiber.
(3) All of the artificial oxide film, the deep-layer oxide film and the deepest-layer oxide film are formed by heating in a vapor phase or under a high oxygen condition.

### BRIEF EXPLANATION OF DRAWINGS

Fig. 1 is explanatory views showing mode examples of an aluminum fiber aggregate, an alumina fiber aggregate and a titania fiber aggregate.
Fig. 2 is a schematic view showing a preparation device of an aluminum fiber.
Fig. 3 is a schematic view showing a preparation device of an aluminum fiber.
Fig. 4 is explanatory views showing a result of an acetaldehyde decomposition comparative test of the titanic fiber aggregate and a non-woven fabric to which photocatalytic function is imparted.
Fig. 5 is explanatory views showing a result of the acetaldehyde decomposition comparative test of the titania fiber aggregate.
Fig. 6 is explanatory views showing a testing method of an NOx decomposition test of the titania fiber aggregate.
Fig. 7 is explanatory views showing a result of the NOx decomposition test of the titania fiber aggregate.
Fig. 8 is explanatory views showing a result of the NOx decomposition test of the titania fiber aggregate.
Fig. 9 is an overall perspective view of a gas treatment system.
Fig. 10 is a front view of the gas treatment system according to the present invention.
Fig. 11 is a cross-sectional view taken along a line I-I in Fig. 10.
Fig. 12 is an explanatory view showing the constitution of the inside of a first-water tank.

### BEST MODE FOR CARRYING OUT THE INVENTION

In a method for forming alumina coating film according to the present invention, an aluminum fiber which has a surface thereof covered with a natural oxide film is prepared, and aluminum which forms a lower layer of the natural oxide film is oxidized by heading up to a temperature approximately half of a melting point of the aluminum fiber thus forming an artificial oxide film below the natural oxide film as a corrosion protective film.

The aluminum fiber is made of pure aluminum or aluminium alloy (hereinafter, referred to as aluminum-based metal). Aluminum alloy is alloy prepared by adding an element such as silicon, iron, copper, manganese, magnesium, zinc, chromium to aluminum, and is metal generally known as 1000 system, 2000 system, 3000 system, 4000 system, 5000 system, 6000 system or 7000 system.

Here, temperature which is approximately half of the melting point means a temperature which falls within a range of ±10% from 0°C to approximately half of the melting point (Celsius) of aluminum-basedmetal which forms the aluminum fiber.

In other words, the temperature approximately half of the melting point means a temperature which falls within a range between an upper-limit temperature and a lower-limit temperature obtained by following formulae.

upper-limit temperature [°C]= (melting point of aluminum-based metal [°C]÷2)×1.1
lower-limit temperature [°C]= (melting point of aluminum-based metal[°C]÷2)×0.9
Then, aluminum which forms the lower layer of the artificial oxide film is oxidized by heating up to a temperature close to the melting point from the temperature approximately half of the melting point of aluminum-based metal which forms the aluminum fiber thus forming a deep-layer oxide film on the lower layer of the artificial oxide film. By further oxidizing aluminum which forms the lower layer of the deep-layer oxide film by heating up to a temperature which exceeds the melting point, a deepest-layer oxide film having a large film thickness is formed on a lower layer of the deep-layer oxide film.

That is, in the method for forming an alumina coating film according to the present invention, by applying the heat treatment of three stages to the aluminum fiber, it is possible to make oxygen infiltrate into a deep portion of the aluminum fiber while maintaining a fiber shape and, at the same time, by forming the oxide film having the four-layered structure, it is possible to prepare the alumina fiber which exhibits favorable heat resistance and favorable dip coating property.

Further, the alumina fiber which is prepared by the method for forming an alumina coating film according to the present invention maintains, while having the alumina layer on the surface thereof, the layer formed below the alumina layer in an aluminum-based metal state and hence, the alumina fiber exhibits high flexibility so that the alumina fiber can be easily deformed into a desired shape. The flexibility which this fiber possesses also exhibits the excellent moldability when an alumina fiber aggregate described next is deformed into a desired shape.

Further, the present invention can uniformly form the alumina coating film on the surface of the aluminum fiber not only in a single fiber state but also in a fiber aggregate state using a simple and low-cost manufacturing method. Still further, the present invention provides the method for forming an alumina coating film which can enhance heat resistance and mechanical properties of the aluminum fiber compared to the aluminum fiber before forming the alumina coating film and the alumina fiber formed by the method. In this embodiment, the alumina fiber means a fiber which forms the artificial oxide film on the lower layer of the natural oxide film which the aluminum fiber includes and the deep-layer oxide film is formed on the lower layer of the artificial oxide film.

The aluminum fiber is, for example, prepared by melting aluminum-based metal and by molding molten aluminum-based metal into a fiber shape by a melt spinning method described later. Here, it is desirable to set a diameter of the aluminum fiber to 50 to 200µm, and it is more preferable to set the diameter of the aluminum fiber to 80 to 150µm. When the fiber diameter becomes below 50µm, there exists a possibility that strength of the alumina fiber on which the oxide film is formed becomes insufficient, while when the fiber diameter exceeds 200µm, heating irregularities are liable to occur at the time of forming the oxide film. Further, a length of the aluminum fiber is suitably adjustable depending on a usage and is not particularly limited.

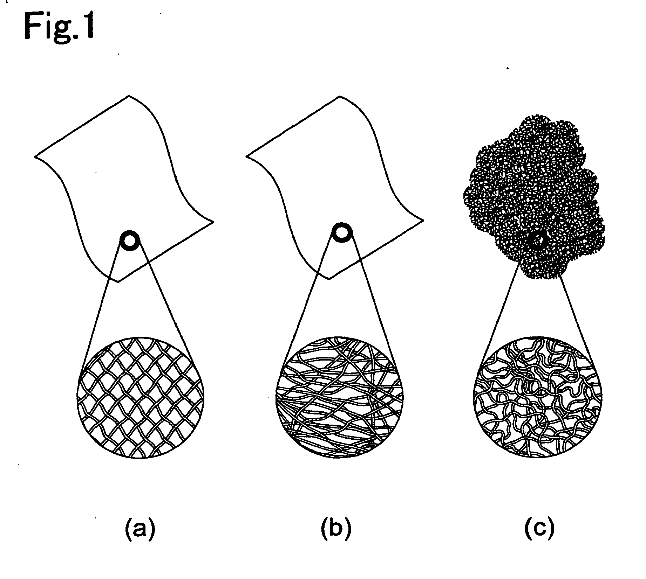

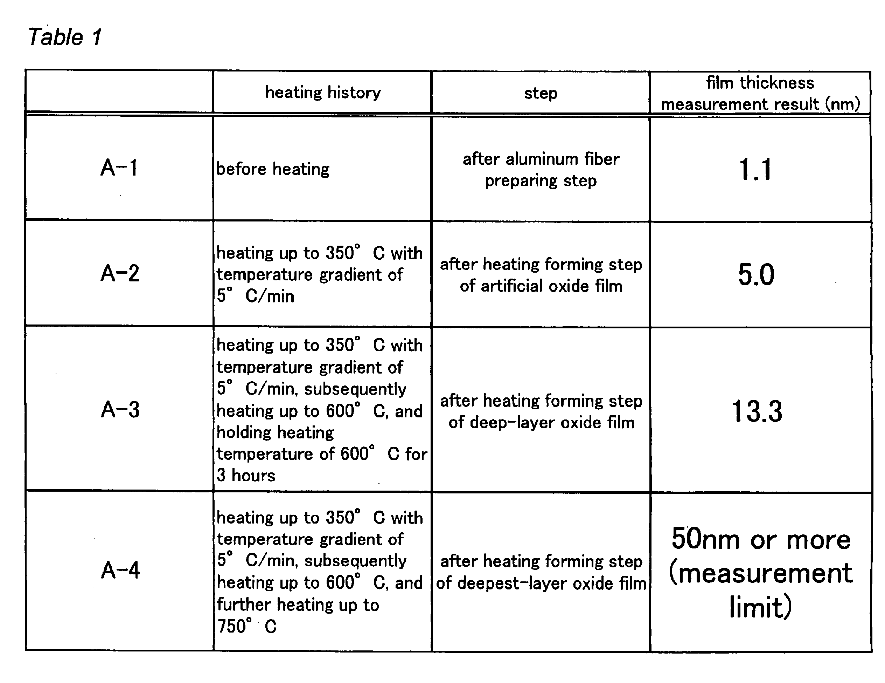

Here, the aluminum fiber aggregate may be formed by aggregating aluminum fibers in various forms. For example, as shown in Fig. 1(a), it is possible to form an aggregate of respective fibers preferably used as a filter or the like by forming aluminum fibers into a sheet shape by weaving. Further, as shown in Fig. 1(b), the aluminum fibers may be formed into an aggregate of respective fibers preferably used as a filter or the like by forming the respective fibers into a non-woven fabric state. Further, as shown in Fig. 1(c), an aggregate may be formed by collecting the respective fibers in a single steel wool shape. By forming the aggregate in this manner, a cost necessary for forming such an aggregate can be suppressed to a low cost. Further, the aggregate formed in a steel wool shape can freely change a shape thereof and hence, the aggregate may be molded into a suitable shape such as a spherical shape, a plate shape, a columnar shape, or a cylindrical shape depending on a usage. By forming the aluminum fiber aggregate by entangling aluminum fibers, it is possible to form the aluminum fiber aggregate into a porous body having a large surface area while having a relatively small volume.

Even when the aluminum fibers are formed into the aggregate, heat applied in the respective oxide film forming steps can extend to every corner of the aluminum fiber aggregate and hence, it is possible to bake a uniform oxide film by uniform heating. Further, by performing unique heating in each oxide film forming step, the respective aluminum fibers which form the aluminum fiber aggregate are thermally expanded and move little by little so that contact points of the fibers repeat the contact and the separation whereby it is possible to perform heating and baking of the oxide film having no irregularities.

The aluminum fibers or the aluminum fiber aggregate formed in this manner are subject to an artificial oxide film forming step, a deep-layer oxide film forming step and a deepest-layer oxide film forming step when necessary which are described later so as to form alumina fibers or the alumina fiber aggregate.

For example, in preparing the plate-shaped alumina fiber aggregate, the steel-wool-shaped aluminum fiber aggregate is stored in a mold, is pressed so that the aluminum fiber aggregate is formed into a plate shape. Then, by heating the aluminum fiber aggregate, the alumina fiber aggregate is formed. Here, by setting an aluminum fiber quantity per 1cm³ to 0.5g to 3g, it is possible to prepare the aluminum fiber aggregate having pores and aluminum fiber density suitable for a filter or a catalyst carrier.

Further, according to the above-mentioned method, the aluminum fiber aggregate is formed by preliminarily collecting the aluminum fibers, and the alumina fiber aggregate is formed by heating this aluminum fiber aggregate. However, the alumina fibers may be formed by directly heating the aluminum fibers and the aluminum fiber aggregate may be formed by collecting these alumina fibers.

The alumina fiber aggregate can also freely change a shape thereof and hence, the alumina fiber aggregate may be also molded into a spherical shape, a plate shape, a columnar shape, a cylindrical shape or the like suitably depending on a usage.

Also in this case, it is preferable to set the density per unit volume of the alumina fibers to 0.5g/cm³ to 3g/cm³.

Further, titania fibers which is prepared by coating titania on the alumina fiber which constitutes a carrier or a titania fiber aggregate which is prepared by coating titania to the alumina fiber aggregate which constitutes a carrier possesses excellent durability, excellent hydrophilicity and excellent water retentiveness derived from the carrier and also possesses the efficient photocatalytic performance. Accordingly, the titania fibers are applicable to broad fields such as the deodorization of odors, the purification of an exhaust gas discharged from an engine or the like, sterilization and purification of water, and the decomposition of organic substances. Further, the titania fibers can exhibit the photocatalytic performance not only in the normal-temperature air but also underwater or under a high temperature condition.

Further, a gas treatment system having a gas treatment filter which includes the alumina fibers and/or the titania fibers is described.

According to this gas treatment system, due to the decomposition by oxidation of harmful substance due to the excellent photocatalytic performance of the titania fiber, it is possible to surely and effectively treat the gas.

Here, when the gas treatment system includes the titania fiber aggregate which is formed by applying titania coating to a surface of the alumina fiber aggregate as the photocatalyst body, it is preferably to set a fiber length to 5mm to 20cm. By using the titania fiber aggregate having the titania fibers of such a fiber length as the photocatalyst body, it is possible to form a photocatalyst body having a large number of fiber distal ends. Accordingly, when the photocatalyst body is immersed in water and ultraviolet rays and ultrasonic waves are radiated, it is possible to efficiently diffuse active oxygen species in water. Here, when the fiber length is set to a value less than 5mm, the fibers are hardly entangled with each other and hence, the shape retention of the photocatalyst body is worsened. On the other hand, when the fiber length becomes 20cm or more, the number of fiber distal ends which the photocatalyst body possess per unit weight is decreased and hence, there exists a possibility that a diffusion efficiency of active oxygen species is worsened. However, when it is difficult to perform a measurement such as a specific surface area measurement in a state that the fibers entangle each other, it may be possible to restrict the fiber length to 5mm so as to prevent the fibers from entangling each other.

A manufacturing method of the alumina fibers according to this embodiment is explained in detail in the following order.
(1) Aluminum fibers preparation step
(2) Artificial oxide film forming step
(3) Deep-layer oxide film forming step
(4) Deepest-layer oxide film forming step

### (1) Aluminum fibers preparation step

Although the aluminum fibers which become the rawmaterial of the alumina fibers according to the present invention are not particularly limited. However, the aluminum fibers can be prepared by a following method, for example.

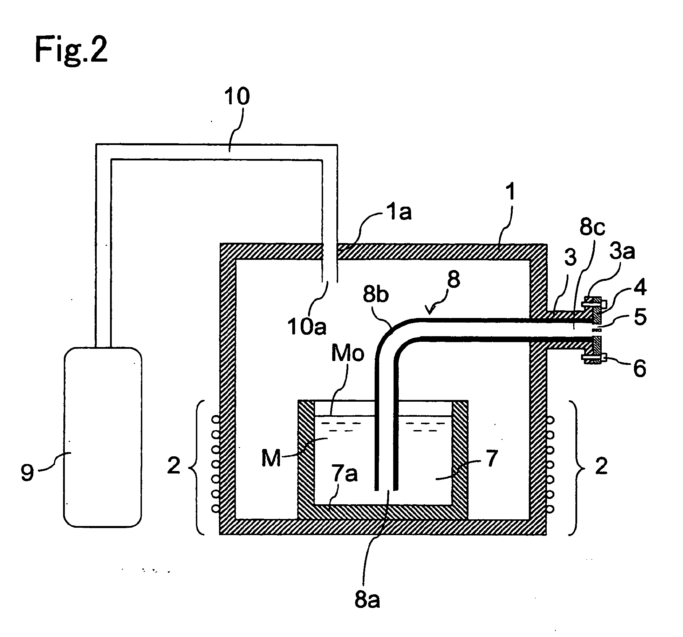

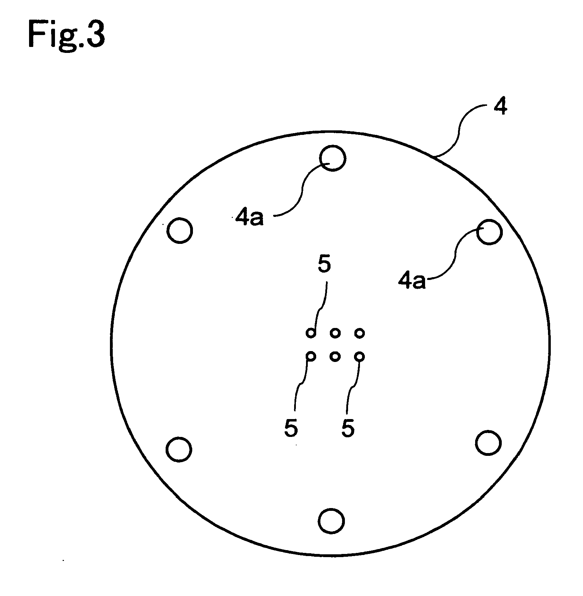

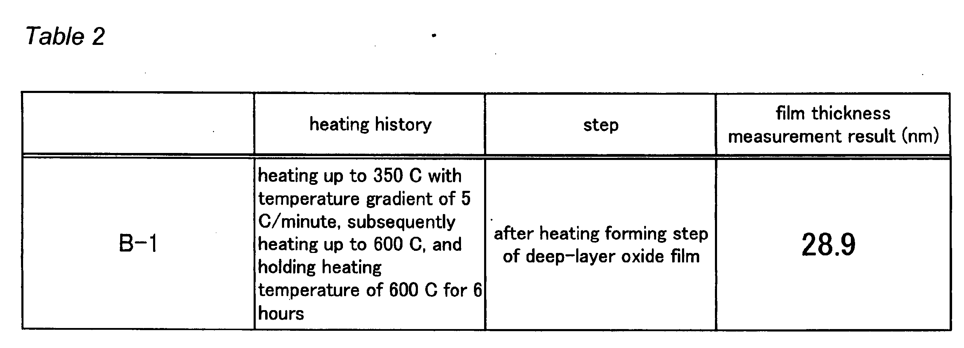

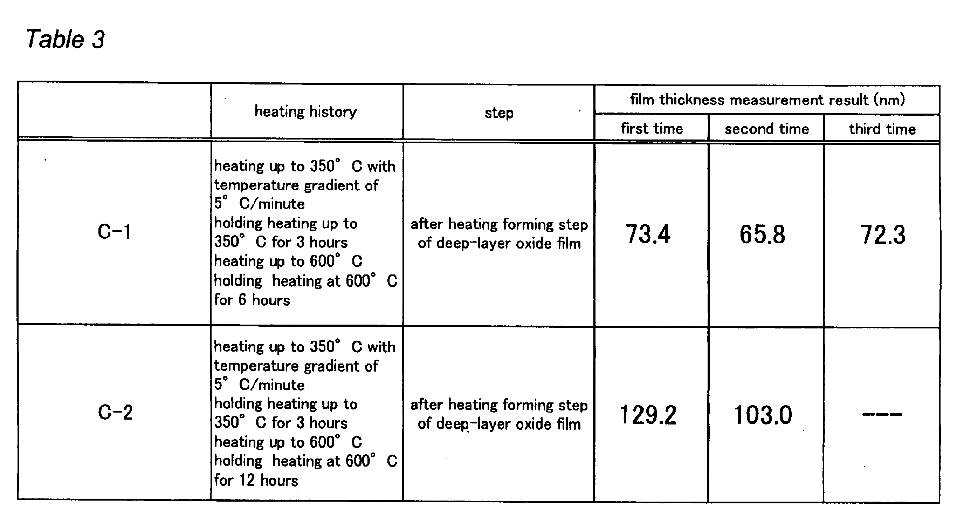

Fig. 2 and Fig. 3 show a system which prepares the aluminum fibers.

In a hermetically-sealed vessel 1, a melting crucible 7 which contains molten metal M made of aluminum-based metal is arranged. By supplying a compressed gas into the inside of the hermetically-sealed vessel 1, the molten metal M is ejected from ejection holes 5, 5, .... The ejected molten metal M is solidified by quenching so that the aluminum fibers are formed. Hereinafter, this aluminum fiber forming method is referred to as melt spinning method.

In Fig. 2 and Fig. 3, symbol 1 indicates the hermetically-sealed vessel, symbol 2 indicates a heating device, symbol 3 indicates a short pipe portion, symbol 3a indicates a flange, symbol 4 indicates a nozzle, symbols 5, 5, ... indicate ejection holes, symbols 6, 6, ... indicate bolts, symbol 7 indicates the melting crucible, symbol 7a indicates a bottom portion, symbol 8 indicates a molten metal supplypipe, symbol 8a indicates a lower-end opening portion, symbol 8b indicates a bent pipe portion, symbol 8c indicates an upper end opening portion, symbol 9 indicates a pressurizing mechanism, symbol 10 indicates a pressurized gas supplypipe, symbol 10a indicates an end portion, symbol M indicates the molten metal, and symbol Mo indicates a molten metal surface.

With the use of such a melt spinning method, it is possible to easily acquire a large quantity of aluminum fibers. Here, the acquired aluminum fibers may be collected in a steel wool shape to form the aluminum fiber aggregate. Using such an aluminum fiber aggregate in the formation of the oxide film explained later, it is possible to acquire the alumina fiber aggregate.

Further, to fiber surfaces of the aluminum fibers or the aluminum fiber aggregate, alumina fine fibers may be adhered.

As such alumina fine fibers, crystallized alumina fibers having a diameter of approximately 3 to 10µm which is smaller than a fiber diameter of the aluminum fibers which constitute the aluminum fiber aggregate can be used. For example, it is possible to use Maftec (registered trade mark), ALS, MLS-2 made by Mitsubishi Chemical Functional Products, Inc or the like.

### (2) Artificial oxide film forming step,

Next, a method for forming an artificial oxide film on surfaces of the aluminum fibers is explained.
The artificial oxide film which is formed below a natural oxide filmof the aluminum fibers is formed by heating the aluminum fibers up to a temperature approximately half of a melting point of the aluminum fibers (allowable within a range of ±10%).

In the heating treatment for forming the artificial oxide film, by heating the aluminum fibers in an oxidizing atmosphere such as an atmospheric atmosphere while maintaining a temperature gradient of approximately 5°C or less per minute, it is possible to form the dense artificial oxide film.

The formedartificial oxide filmplays a role of preventing the aluminum fibers from being collapsed by melting at the time of forming the deep-layer oxide film by heating described later.

Here, the artificial oxide film may be formed such that the aluminum fibers are heated up to a temperature approximately half of themeltingpoint of the aluminum fibers while maintaining a temperature gradient of approximately 5°C or less per minute and, thereafter, the temperature approximately half of the melting point is maintained for a predetermined time.

Byholding a temperature approximatelyhalf of the melting point for the predetermined time, a thickness of the artificial oxide film can be increased. Accordingly, it is possible to further effectively prevent the aluminum fibers from being collapsed by melting at the time of forming the deep-layer oxide film. Further, byholdingsuchatemperature, itisalsopossible to acquire an advantageous effect that the alumina fibers having a stable film thickness can be formed.

The holding time can be suitably changed corresponding to a desired film thickness. By preferably holding the temperature for approximately 30 minutes to 3 hours, it is possible to acquire an advantageous effect that the film thickness of the deep-layer oxide film can be made stable.

When the holding time is less than 30 minutes, no temperature holding effect is obtained by holding the temperature, while when the holding time exceeds 3 hours, no apparent increase of the film thickness is desired and the production efficiency is lowered.

Further, with respect to the artificial oxide film formed by the above-mentioned method, it is preferable to perform the treatment such that a total thickness of the natural oxide film and the artificial oxide film becomes 5nm or more. In this case, it is possible to form the deep-layer oxide film while preventing the collapse of the aluminum fibers.

### (3) Deep-layer oxide film forming step

Next, the deep-layer oxide film is formed below the artificial oxide film. With the formation of the deep-layer oxide film, it is possible to form the aluminum fibers into the alumina fibers.

The alumina fibers are formed by heating the aluminum fibers in an oxidizing atmosphere such as an atmospheric atmosphere up to a temperature close to the melting point of the aluminum-based metal which forms the aluminum fibers from the temperature approximately half of the melting point of the aluminum-based metal.

The heating temperature during the heating treatment for forming the deep-layer oxide film may be a temperature as high as possible provided that the temperature is below the melting point of the aluminum-based metal which forms the aluminum fibers. The heating temperature may preferably be a temperature which is lower than the melting point (°C) by approximately 10%. This is because that the higher the heating temperature, more efficiently aluminum can be oxidized and, at the same time, it is possible to prevent the aluminum fibers from being erroneously heated at a temperature which exceeds the melting point.

The alumina fibers which form the deep-layer oxide film constitute fibers which are surrounded by an alumina shell having a large film thickness.

The melting point of the alumina shell is higher than a melting point (660°C) of pure aluminum and a melting point of general aluminum-based metal, and is approximately 1400 to 2050°C.

Accordingly, when the alumina fibers is heated at a temperature which exceeds the melting point of aluminum-based metal, aluminum-based metal which is present from a lower layer to a center portion of this shell is melted. However, so long as alumina shell is not melted, the alumina fibers can maintain a fiber shape.

That is, the natural oxide film, the artificial oxide film and the deep-layer oxide film play a role of the shells whichprevent the aluminum-based metal below the deep-layer oxide film from being melted and flown out at the time of heating the alumina fibers at a temperature equal to or more than the melting point of the aluminum-based metal in the heating forming treatment step of the deepest-layer oxide film described later.

Accordingly, even when the aluminum-based metal in the inside of the fibers is melted by the heating forming treatment step of the deepest-layer oxide film at a temperature which exceeds the melting point of aluminum, the natural oxide film, the artificial oxide film and the deep-layer oxide film formed on a surface of the alumina fibers are not melted and hence, the alumina fibers can maintain the fiber shape.

Here, to form the artificial oxide film and the deep-layer oxide film which can withstand the heating forming treatment of the deepest-layer oxide film, it is preferable to set a total thickness of the natural oxide film, the artificial oxide film and the deep-layer oxide film to 50nm or more in the heating forming treatment step of the deep-layer oxide film. When the aluminum fibers having a diameter of 100µm is used, a thickness of 50nm of the alumina coating film corresponds to 1/2000 of the diameter of the aluminum fibers. When the film thickness of the alumina coating film becomes a value less than 50nm, the alumina fibers can not hold the fiber shape in the heating forming treatment step of the deepest-layer oxide film and hence, there exists a possibility that aluminum which is present in the inside of the alumina fibers is melted and flows out to form a block.

Further, since the artificial oxide film and the deep-layer oxide film are formed of aluminum oxide having high corrosion resistance, the artificial oxide film and the deep-layer oxide film also constitute a corrosion protective film which protects the aluminum-based metal present in the inside of the alumina fibers from corrosion.

Along with such findings, due to extensive studies made by inventors of the present invention, it is also found that by setting the film thickness of the oxide film to 50nm or more, the alumina fibers can obtain a surface suitable for favorable dip coating.

The alumina fibers, as a whole, possesses heat resistance against the temperature higher than the melting point of the aluminum-based metal. Here, the heat resistance implies, as mentioned previously property which allows the alumina fibers to maintain the fiber shape even under the condition that heating temperature is higher than the melting point of the aluminum-based metal which forms the aluminum fibers. That is, the heat resistance does not imply the resistance against the momentary exposure temperature but the resistance against the environmental maintenance temperature.

Further, in the deep-layer oxide film step, by holding the alumina fibers at a temperature close to the melting point for a predetermined time, it is possible to form the deep-layer oxide film having the more stable thickness. Here, although the temperature holding time is not particularly limited, the temperature holding time may be set to approximately 30 minutes to approximately 12 hours. When the temperature holding time is less than 30 minutes, it is impossible to acquire an advantageous effect to make the film thickness of the deep-layer oxide film stable. On the other hand, when the heating temperature is held for a time exceeding 12 hours, no apparent film thickness stabilizing effect can be obtained.

Further, by performing the heating in two stages consisting of the heating which is performed at the temperature approximately half of the melting point of the aluminum-based metal and the heating which is performed at the temperature raising from the temperature approximately half of the melting point of the aluminum-based metal to the melting point of the aluminum-basedmetal forapredeterminedtime, it may be possible to form the artificial oxide film and the deep-layer oxide film having the stable film thickness below the natural oxide film.

The alumina fibers according to the present invention which includes the natural oxide film, the artificial oxide film and the deep-layer oxide film formed in this manner have surfaces suitable for favorable dip coating.

Here, it is found that by performing the heating treatment at the temperature equal to or less than the melting point for a long time, the oxidation reaction gently advances along with a lapse of time, and at a point of time that the film thickness of the alumina coating film exceeds approximately 50nm, the alumina fibers start exhibiting of a function of alumina. This implies that even when the deepest-layer oxide film described later is not formed, the alumina fibers have a sufficient use value as a carrier of a photocatalyst. Accordingly, depending on a desired usage or use condition, the alumina fibers or the titania fibers may adopt the three-layered structure or the four-layered structure.

### (4) deepest-layer oxide film forming step

Next, a method for forming the deepest-layer oxide film on the alumina fibers is explained.

The alumina fiber having the above-mentioned deep-layer oxide film has already possessed the surface suitable for favorable dip coating and hence, depending on the desired film thickness of the oxide film, this step is not always necessary. However, when it is desirable to impart further heat resistance to the alumina fiber or when it is necessary to further increase the thickness of the oxide film, this step is effective.

The deepest-layer oxide film formed by this step is a layer which is formed further below the deep-layer oxide film by heating the alumina fiber at a temperature higher than the melting point of the aluminum-based metal forming the aluminum fiber.

The heating treatment performed in this step may perform heating at a temperature which exceeds the melting point of the aluminum-based metal for forming the aluminum fiber, canmaintain a fiber shape, and can maintain the crystal structure of alumina.

Accordingly, it is preferable to suitably adjust the heating forming temperature of the deepest-layer oxide film corresponding to the melting point of aluminum-based metal for forming the aluminum fiber.

For example, when aluminum-based metal for forming the aluminum fiber is aluminum of 1000 order having a melting point of approximately 660°C, the heating forming temperature of the deepest-layer oxide film can be set to a value which falls within a range from 660°C to 800°C.

By forming the alumina coating film in this manner, the alumina fiber can have the four-layered structure consisting of the natural oxide film, the artificial oxide film, the deep-layer oxide film and the alumina coating film which constitutes the deepest-layer oxide film and a film thickness of the four-layered oxide film is set to 50nm or more and hence, it is possible to impart the excellent heat resistance to the alumina fiber.

Further, by performing the heating forming treatment of the artificial oxide film, the deep-layer oxide film and the deepest-layer oxide film particularly in air, it is possible to manufacture the high-quality alumina fiber at a low cost.

Here, in the heating forming treatment of the artificial oxide film, the deep-layer oxide film and the deepest-layer oxide film, these films may be formed by continuously elevating the heating temperature. However, in performing such a heating forming treatment, the artificial oxide film and the deep-layer oxide film are continuously formed by continuously elevating the heating temperature of the aluminum fiber up to 600°C gradually at a gradient of 5°C per minute and, thereafter, the deepest-layer oxide film may be formed by heating the aluminum fiber at a temperature which exceeds the melting point of the aluminum fiber.

Although the alumina fiber according to the present invention may be formed using the aluminum fiber in the above-mentioned manner, it is needless to say that the alumina fiber aggregate may be formed by treating the aluminum fiber aggregate in the same manner. Further, the alumina fiber aggregate may be formed by forming the alumina fibers and, thereafter, by collecting the alumina fibers.

Next, properties of the aluminum fiber and the alumina fiber which are obtained in the above-mentioned respective steps consisting of (1) aluminum fiber preparing step, (2) artificial oxide film forming step, (3) deep-layer oxide film forming step, and (4) deepest-layer oxide film forming step are explained.

### (5) film thicknesses of aluminum fiber and alumina fiber

First of all, film thicknesses of the oxide films which the aluminum fiber or the alumina fiber acquired by the above-mentioned respective steps (1) to (4) includes are measured.

Measured samples are obtained by making the aluminum fibers having a diameter of 100µm which are prepared by a melt spinning method using aluminum-based metal of 1000 order subject to the above-mentioned respective steps (1) to (4).

Further, the film thicknesses are measured based on the AES depth profile measurement. With the use of this measuring method, by digging a fine hole into a deep portion from a surface of the aluminum fiber or the alumina fiber, it is possible to measure a thickness of the oxide film. Here, in performing the AES depth profile measurement, an Auger electron spectroscope meter (Auger microwave JAMP-10MXII made by JEOL Ltd.) is used. The film thickness of an alumina layer is calculated based on an intersecting point of relative mass curves of an aluminum and oxygen obtained by the measurement. Although it is considered that the alumina layer has a thickness more than the acquired numerical value in the actual aluminum fiber or the alumina fiber, the intersecting point is defined as the film thickness of the alumina layer by taking an error range of the numerical value into consideration.

**[Table 1]**

| | heating history | step | film thickness measurement result (nm) |
|---|---|---|---|
| A-1 | before heating | after aluminum fiber preparing step | 1.1 |
| A-2 | heating up to 350°C with temperature gradient of 5°C/min | after heating forming step of artificial oxide film | 5.0 |
| A-3 | heating up to 350°C with temperature | after heating forming step of | 13.3 |
| | gradient of 5°C/min, subsequently heating up to 600°C, and holding heating temperature of 600°C for 3 hours | deep-layer oxide film | |
| A-4 | heating up to 350°C with temperature gradient of 5°C/min, subsequently heating up to 600°C, and further heating up to 750°C | after heating forming step of deepest-layer oxide film | 50nm or more (measurement limit) |

As shown in A-1 in Table 1, it is found that a natural oxide film having a thickness of approximately 1nm is formed on a surface of the aluminum fiber acquired by the aluminum fiber preparing step.

Further, A-2 shows a result of the formation of an artificial oxide film which is formed by heating the aluminum fiber at a temperature up to 350°C in air and, while maintaining a temperature gradient of approximately 5°C or less per minute and holding the temperature for 10 hours. A-2 shows that a total thickness of the natural oxide film and the artificial oxide film which are present in the aluminum fiber is approximately 5nm.

To particularly focus on the result of A-2, even when the heating treatment is performed for a long time (10 hours in total in this embodiment) at a temperature equal to or below the melting point, only with heating and baking of one stage, the oxidizing reaction progresses but gently.

A-3 shows a film thickness of the alumina fiber which is subject to heat treatment in the deep-layer oxide film forming step. As a result, it is found that an oxide film having a further larger thickness of 13nm is acquired compared to A-2.

A-4 shows a result of measurement of a film thickness of the deepest-layer oxide film when the deepest-layer oxide film is obtained by heating the alumina fiber obtained by the deep-layer oxide film forming step up to 750°C. By making the alumina fiber subject to the deepest-layer oxide film forming step, it is found that an oxide film of 50nm or more which is a measurement limit of this experiment system is formed on the alumina fiber.

Due to the results of these A-1 to A-4, it is found that the alumina coating film forming method according to the present invention can form the oxide film having a large film thickness which is 10 to 50 times or more as large as a film thickness of a natural oxide film.

Next, the influence which is imparted to the film thickness when the heating is held for a predetermined time at a temperature close to the melting point of aluminum-based metal which constitutes the aluminum fiber in the deep-layer oxide film forming step is confirmed.

**[Table 2]**

| | heating history | step | film thickness measurement result (nm) |
|---|---|---|---|
| B-1 | heating up to 350°C with temperature gradient of 5°C/minute, subsequently heating up to 600°C, and holding heating temperature of 600°C for 6 hours | after heating forming step of deep-layer oxide film | 28.9 |

B-1 shown in Table 2 indicates a film thickness of the oxide coating film when heating is held for 6 hours at a temperature (600°C) close to the melting point of 1000-order aluminum-based metal in the deep-layer oxide film forming step. As a result of the measurement, it is found that the film thickness is 28.9nm.

By comparing this result and the result of holding heating for 3 hours shown in A-3 in Table 1, it is found that by holding heating for a predetermined time at the temperature close to the melting point in the heating forming step of the deep-layer oxide film, the film thickness of the oxide film can be further increased.

Next, the influence which is imparted to the film thickness when the heating is held for a predetermined time at a temperature approximately half of the melting point in the artificial oxide film forming step and, thereafter, the heating temperature is elevated up to a temperature close to the melting point in the deep-layer oxide film forming step and, subsequently, the meting point is held for a predetermined time is confirmed.

**[Table 3]**

| | heating history | step | film thickness measurement result (nm) | | |
|---|---|---|---|---|---|
| | | | first time | second time | third time |
| C-1 | heating up to 350°C with temperature gradient of 5°C/minute holding heating up to 350°C for 3 hours heating up to 600°C holding heating at 600°C for 6 hours | after heating forming step of deep-layer oxide film | 73.4 | 65.8 | 72.3 |
| C-2 | heating up to 350°C with temperature gradient of 5°C/minute holding heating up to 350°C for 3 hours heating up to 600°C holding heating at 600°C for 12 hours | after heating forming step of deep-layer oxide film | 129.2 | 103.0 | - - - |

C-1 in Table 3 indicates a result when heating is held for 3 hours in the artificial oxide film forming step and heating is held for 6 hours in the deep-layer oxide film forming step, while C-2 in Table 3 indicates a result when heating is held for 3 hours in the artificial oxide film forming step and heating is held for 12 hours in the deep-layer oxide film forming step.

It is found from Table 3 that by performing the holding of temperature in two stages in the artificial oxide film forming step and the deep-layer oxide film forming step, an oxide film having a further larger thickness can be formed.

Further, due to results of repeated tests performed twice or three times in series, it is found that the alumina fiber having the substantially stable film thickness can be acquired.

Next, a result of a film thickness measurement test when the aluminum fiber is inputted into and baked in a furnace preliminarily heated at a temperature close to the melting point without making the aluminum fiber subject to the artificial oxide film forming step and the deep-layer oxide film forming step.

**[Table 4]**

| | heating history | film thickness measurement result (nm) | | | |
|---|---|---|---|---|---|
| | | first time | second time | third time | fourth time |
| D-1 | heating for 6 hours in furnace which is preliminarily heated at 600°C | 61.1 | 25.7 | 60.9 | 35.6 |

D-1 in Table 4 shows a result when the oxide film is formed by putting the aluminum fiber in the inside of the furnace which is preliminarily held at a temperature of 600°C. A result of the test which is repeated four times exhibits extremely large irregularities in film thickness. Further, in the second-turn and the fourth-turn of the repeated test, the film thickness of the oxide filmassumes values largelybelow 50nm. Accordingly, it is found that the oxide film forming method according to this testing method is difficult to form the alumina fiber having favorable heat resistance and favorable dip coating property.

Based on the result of this test, it is found that the artificial oxide film forming step and the deep-layer oxide film forming step contribute to the formation of the stable oxide film.

Furthermore, the result of the test suggests that to acquire the stable film thickness, it is important to heat the aluminum fiber up to the temperature approximately half of the melting point of the aluminum-based metal which constitutes the aluminum fiber at a temperature gradient of 5°C/min and also to hold the temperature approximately half of the melting point for a predetermined time.

By forming the alumina coating film in this manner, the alumina fiber can have the four-layered structure consisting of the natural oxide film, the artificial oxide film, the deep-layer oxide film and the alumina coating film which constitutes the deepest-layer oxide film and a film thickness of the four-layered oxide film is set to 50nm or more and hence, it is possible to impart the excellent heat resistance to the alumina fiber.

Further, by performing the heating forming treatment of the artificial oxide film, the deep-layer oxide film and the deepest-layer oxide film particularly in air, it is possible to manufacture the high-quality alumina fiber at a low cost.

Here, in the heating forming treatment of the artificial oxide film, the deep-layer oxide film and the deepest-layer oxide film, these films may be formed by continuously elevating the heating temperature. However, in performing such a heating forming treatment, the artificial oxide film and the deep-layer oxide film are continuously formed by continuously elevating the heating temperature of the aluminum fiber up to 600°C gradually at a gradient of 5°C per minute and, thereafter, the deepest-layer oxide film is formed by heating the aluminum fiber at a temperature which exceeds the melting point of the aluminum fiber.

### (6) Surface areas of aluminum fiber and alumina fiber

Then, the aluminum fiber is heated up to a temperature (350°C) which is approximately half of the melting point of 1000-order aluminum-based metal at a temperature gradient of 5°C/min or less and, further, the temperature approximately half of the melting point is held for 3 hours, and the aluminum fiber is heated up to approximately 600°C which is lower than the melting point by 10%, and the aluminum fiber is continuously baked for 12 hours at maximum to form the alumina fiber. Then, a specific surface area of the alumina fiber is measured.

The specific surface area of the alumina fiber is measured by a Brunauer-Emmet -Teller (BET) Method using Autosorb-1 made by Quantachrome Instruments. Here, prior to the measurement by this method, as a pretreatment, the nitrogen gas conversion is performed at a temperature of 300°C for 30 minutes.

A result of the specific surface measurement is shown hereinafter.

**[Table 5]**

| | Heating History | BET value (m²/g) |
|---|---|---|
| E-1 | Before heating | 0.13 |
| E-2 | Heating by elevating temperature up to 350°C at | 1.07 |
| | temperature gradient of 5°C/min holding the heating temperature at 350°C for 30 minutes | |
| E-3 | Heating by elevating temperature up to 350°C at temperature gradient of 5°C/min holding the heating temperature at 350°C for 3 hours | 1.47 |
| E-4 | Heating by elevating temperature up to 350°C at temperature gradient of 5°C/min holding the heating temperature at 350°C for 3 hours heating by elevating temperature up to 600°C | 0.98 |
| E-5 | Heating by elevating temperature up to 350°C at temperature gradient of 5°C/min holding the heating temperature at 350°C for 3 hours heating by elevating temperature up to 600°C holding the heating temperature at 600°C for 3 hours | 0.56 |
| E-6 | Heating by elevating temperature up to 350°C at temperature gradient of 5°C/min holding the heating temperature at 350°C for 3 hours heating by elevating temperature up to 600°C holding the heating temperature at 600°C for 6 hours | 0.68 |
| E-7 | Heating by elevating temperature up to 350°C at temperature gradient of 5°C/min holding the heating temperature at 350°C for 3 hours heating by elevating temperature up to 600°C holding the heating temperature at 600°C for 12 hours | 1.01 |

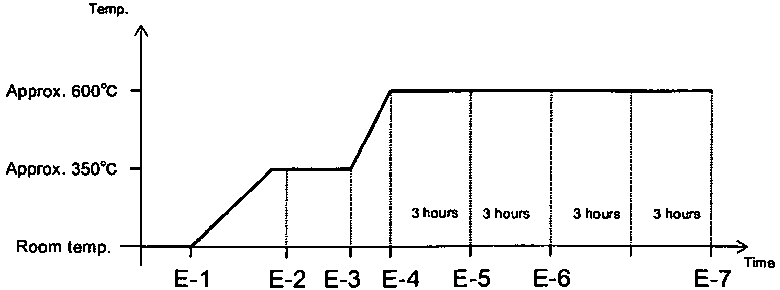

Table 5 shows a result of specific surface areas which are measured at respective measuring points ranging from E-1 to E-7.

As a result, the specific surface area is increased by heating and baking up to 350°C, and assumes the maximum 1.47m²/g after baking at temperature 350°C for 3 hours (E-3). However, with the succeeding heating up to 600°C, the specific surface area is decreased once. As indicated by (E-5), after being baked at 600°C for 3 hours, the specific surface area is decreased to 0.56m²/g to reach a minimum value. However, with the further succeeding baking at 600°C, the specific surface area is increased, and assumes 1.01m²/g after 12 hours (E-7).

To study these results, it is considered that although the artificial oxide film which is acquired by heating ranging from (E-1) to (E-4) increases the specific surface area thereof along with heating, the artificial oxide film is yet an aggregate of a thin oxide film and hence the artificial oxide film is a fragile film which is loosely bonded with the aluminum-based metal at a deep portion of the fiber.

This understanding is also suggested by a fact that when each fiber acquired by heating ranging from (E-1) to (E-4) is putted into a sample bottle or the like and is agitated in a dry state, a peeled powdery oxide film adheres to a wall surface of the sample bottle.

In the heating and baking at 600°C which is performed subsequently, the loose bonding is tightened to become hard and firm bonding so that the specific surface area is once decreased (E-5).

Thereafter, the film thickness of the deep-layer oxide film is increased along with a laps of time.

Due to such results, to acquire the alumina fiber having the sufficient film thickness and also having the large specific surface area, it is suggested preferable to adopt the method in which the aluminum fiber is heated up to the temperature approximately half of the melting point of the aluminum-based metal which forms the aluminum fiber at a temperature gradient of 5°C/min or less and, subsequently, the temperature approximately half of the melting point is held for the predetermined time, and the heating temperature is elevated to the temperature close to the melting point, and the heating temperature is held at the temperature close to the melting point for the predetermined time.

Next, the specific surface area of the aluminum fiber which bonds the alumina fine fiber having a fiber diameter of 5µm to the aluminum fiber having a fiber diameter of 100µm is measured. As mentioned previously, the crystal alumina fiber having a diameter of approximately 3 to 5µ such as the above-mentioned Maftec (registered trade mark) ALS, MLS-2 is placed on an aluminum fiber aggregate molded in a plate shape, and the aluminum fiber is sieved by finely vibrating the aluminum fiber whereby the alumina fine fiber is uniformly adhered to a surface of the aluminum fiber. In a state that the alumina fine fiber is adhered to the surface of the aluminum fiber, the heating temperature is elevated up to 350°C in the artificial oxide film forming step, and the heating temperature is held for 3 hours. Thereafter, the heating temperature is elevated up to 600°C in the deep-layer oxide film forming step and the heating temperature is held at the same temperature for 12 hours thus forming the oxide film.

**[Table 6]**

| | Heating history | step | BET value (m²/g) |
|---|---|---|---|
| F-1 | heating up to 350°C with temperature gradient of 5°C/minute holding heatingup to 350°C for 3 hours heating up to 600°C holding heating at 600°C for 12 hours | after heating forming step of deep-layer oxide film | 0.96 |

As shown in Table 6, an aluminum fiber F-1 which forms an oxide film thereon together with the ALS has the specific surface area of 0.96m² per 1g.

As described above, according to the forming method of the alumina coating film according to the present invention, it is possible to form an alumina layer having a large thickness on an aluminum fiber. This implies that the alumina fibers possess heat resistance and a surface suitable for favorable dip coating.

### (7) Titania coating

Next, the explanation is made with respect to an example in which aggregates of respective fibers are formed using the aluminum fibers E-1, the alumina fiber E-7 and the alumina fiber F-1 which are prepared in the above-mentioned test, and titania coating is applied to these aggregates by a dip coating method.

Here, a fiber which is obtained by applying dip coating to the aluminum fiber E-1 is referred to as a titania coating aluminum fiber so as to distinguish the fiber from a titania fiber which is obtained by applying titania coating to an alumina fiber, and an aggregate which is obtained by aggregating the titania coating aluminum fibers is referred to as a titania coating aluminum fiber aggregate.

The alumina fiber aggregate which has anatase-type titania coating (hereinafter, simply referred to as a titania fiber aggregate) can be formed also using an alumina fiber aggregate which is prepared through a deep-layer oxide film forming step. However, with respect to a rutile-type titania fiber aggregate, it is necessary to heat and bake the rutile-type titania fiber aggregate up to a temperature of approximately 750°C in a heating and baking process and hence, it is preferable to use an alumina fiber aggregate which has a deepest-layer oxide film.

In this dip coating method is a method, an alumina fiber aggregate or an aluminum fiber aggregate is immersed in a sol liquid containing a titania compound, and is pulled up from the sol liquid, and the sol liquid adhered to a surface of the alumina fiber aggregate or the aluminum fiber aggregate is dried thus forming a titania thin film on the alumina fiber aggregate or the aluminum fiber aggregate.

When the sol liquid used in the dip coating method is constituted of a titanium compound, solation agent and a solvent, a ratio of these components, that is, a molar ratio, is preferably set to approximately 1:0.5:5 to 1:10:100 in general, for example, and is more preferably set to approximately 1:1:10 to 1:5:50. On the other hand, when the sol liquid is constituted of a titanium compound, chelation ligand and a solvent, a ratio of these components is preferably set to approximately 1:0.1:5 to 1:10:100 in general, for example, and is more preferably set to approximately 1:0.5:10 to 1:5:50.

For example, it is possible to form respective titania thin films by preparing following two kinds of sol liquids.

### Sol A liquid:

A sol liquid which is obtained by mixing titanium tetra isopropoxide, diethanolamine and ethanol at a molar ratio of 1:2.5:34.

### Sol B liquid:

A sol liquid which is obtained by mixing titanium tetra isopropoxide, acetylacetone, deionized water and ethanol at a molar ratio of 1:1:3:20.

The alumina fiber aggregate or the aluminum fiber aggregate is immersed in these sol liquids for a fixed time and, thereafter, the immersed alumina fiber aggregate or the immersed aluminum fiber aggregate is taken out from the sol liquid, and is subject to primary drying in air.

After completion of the primary drying, the alumina fiber aggregate or the aluminum fiber aggregate is heated and baked in a muffle furnace (F0300 made by YAMATO SCIENTIFIC CO., LTD.) in an air atmosphere. The determination of the maximum temperature in this heating treatment is reviewed at a pitch of 50°C within a range from 300°C to 550°C, and it is found that an anatase type photocatalytic reaction is most preferably induced at the maximum temperature of 450°C. It is preferable to elevate a temperature to induce the reaction gradually in theheatingstep. That is, to apply the coating most efficiently, the alumina fiber aggregate or the aluminum fiber aggregate is heated up to a temperature of 450°C from a room temperature at a temperature elevation ratio of 2°C per minute, the temperature is held for 3 hours and, thereafter, the alumina fiber aggregate or the aluminum fiber aggregate is cooled naturally. To induce the rutile type photocatalytic reaction which exhibits the less photocatalytic ability but is a visible light response type photocatalytic reaction, it is necessary to hold the baking temperature at 750°C.

Byperformingtheabove-mentionedimmersing, overheating and baking operation one time, the titania coating film having a film thickness of approximately 140nm is formed on the E-7 alumina fiber which constitutes the alumina fiber aggregate. By repeating this operation three times in total, the titania coating film having a film thickness of approximately 400nm is formed on the alumina fiber thus finally producing a functional catalytic fiber which exhibits a photocatalytic function as a titania fiber aggregate.

Further, by repeatedly applying dip coating to the aluminum fiber aggregate E-1 three times in the same manner, it is possible to form a titania coating aluminum fiber aggregate with the titania thin film having a film thickness of 400nm.

Here, with the use of the above-mentioned sol liquid A or sol liquid B, it is possible to apply dip coating to the alumina fine fiber aggregate such as Maftec (registered trade mark) ALS or MLS-2. However, the alumina fine fiber aggregate are formed of fine fibers and hence, the sol liquid is non-uniformly adhered to the alumina fiber aggregate. Accordingly, titania dip coating to the alumina fine fiber aggregate such as Maftec (registered trade mark) ALS or MLS-2 is performed by a following method while preventing the non-uniform adhesion of the sol liquid.

That is, the sol liquid for dip coating the alumina fine fiber aggregate such as Maftec (registered trade mark) ALS or MLS-2 is prepared by setting a molar ratio of titanium tetra isopropoxide: ethanol: acetylacetone: distilled water to 1:20:3:6 (hereinafter, referred to as sol C liquid). The sol C liquid which is prepared at this molar ratio exhibits lower viscosity thus easily infiltrates into pores formed in the fibers and hence, the sol C liquid is preferablyused for applying coating to fine fibers and, particularly, for applying titania coating to alumina fine fibers.

To be more specific, the prepared sol C liquid is poured into a stainless-made vat and, the alumina fine fiber aggregate is immersed in the sol C liquid in the vat.

Next, ultrasonic vibrations of an intermediate wavelength is applied to the sol C liquid for 15 minutes and, thereafter, the sol liquid is held in a still state for 45 minutes. In this manner, by applying the ultrasonic vibrations of the intermediate wavelength to the sol C liquid, a solution can sufficiently infiltrate into the inside of fiber mesh and hence, it is possible to perform coating to a deep portion of the fiber net. Although a time for applying ultrasonic vibrations is set to 15 minutes in this embodiment, it is preferable to set the time to 30 seconds to 30 minutes. It is because when the time for applying ultrasonic vibrations is equal to or less than 30 seconds, there exists a possibility that the sol liquid does not sufficiently infiltrate into fibers, while when the ultrasonic vibrations are applied more than 30 minutes, there exists a possibility an adverse effect is applied to the alumina layer of the alumina fiber. Here, the use of ultrasonic vibrations of low wavelength may damage or peel off the adhered titania layer and hence, it is considered that the use of ultrasonic vibration of the low wavelength is not preferable.

Although the sol C liquid is held in a still state after the ultrasonic treatment for 45 minutes according to this embodiment, the time is not particularly limited and hence, it is sufficient to keep the sol C liquid still for 30 minutes to 6 hours.

The alumina fine fiber aggregate immersed in the sol C liquid for 1 hour is gradually taken out from the sol C liquid, and the primary drying of the alumina fine fiber aggregate is performed by keeping the alumina fine fiber aggregate in air at normal temperature for 2 hours or more. In performing the primary drying, the sol C liquid adhered to the alumina fine fiber aggregate can be dried more efficiently by performing air-drying. Further, drying may be accelerated by radiating infrared rays to fibers or fiber aggregate to which sol liquid is adhered.

Next, after the sol C liquid adhered to the alumina fine fiber aggregate is dried, the alumina fine fiber aggregate is heated to fix titania to the alumina fine fiber aggregate. In heating the alumina fine fiber aggregate in a muffle furnace in an air atmosphere, it is preferable to set a temperature elevation ratio to 2°C to 15°C per minute from room temperature. In this embodiment, the alumina fine fiber aggregate is heated up to a temperature of 450°C at a temperature elevation ratio of 2°C, and the temperature is held for 3 hours and, thereafter, the alumina fine fiber aggregate is cooled naturally.

By repeatedly performing the above-mentioned series of steps of immersing the alumina fiber aggregate into sol C liquid, and succeeding air-drying and heating for fixing titania on the alumina fiber aggregate three times or more, the titania coating is applied to the alumina fine fiber aggregate thus preparing the titania fiber aggregate.

Here, in this embodiment, titania coating is performed by applying the ultrasonic treatment only to the sol C liquid. However, also in performing titania coating using the sol A liquid or the sol B liquid, the ultrasonic treatment may be applied to the liquid.

### (8) Pigment decomposition test

Next, to studyaphotocatalytic performance of the titania coating aluminum fiber aggregate prepared using E-1 and the titania fiber aggregate prepared using E-7 and F-1, a decomposition performance test of pigment is performed. Further, a decomposition performance test of pigment is also simultaneously performed on samples which are obtained by applying titania coating on alumina fine fibers.

That is, following eight kinds of samples are served for the test.
Cont. : Alumina fiber aggregate to which titania coating is not applied (control).
Sample 1: E-1 aluminum fiber aggregate to which titania coating is applied using sol A liquid
Sample 2: E-7 alumina fiber aggregate to which titania coating is applied using sol B liquid
Sample 3: E-7 alumina fiber aggregate to which titania coating is applied using sol C liquid
Sample 4: F-1 alumina fiber aggregate using Maftec (registered trade mark) ALS to which titania coating is applied using sol C liquid
Sample 5: F-1 alumina fiber aggregate using Maftec (registered trade mark) MLS-2 to which titania coating is applied using sol C liquid
Sample 6: Maftec (registered trade mark) ALS to which titania coating is applied using sol C liquid
Sample 7: Maftec (registered trade mark) MLS-2 to which titania coating is applied using sol C liquid

Further, as an object to be decomposed, methylene blue (methylene blue:3,7-bis (dimethlamino) phenothiazine-5-ium chloride) is used.

A pigment decomposition test is performed such that 1g of each fiber isput in the inside of an albedo magnetism container, and 10ml of methylene blue solution of 0.1% is poured into each albedo magnetism container and, thereafter, ultraviolet rays are radiated to the fiber in the solution from two blacklight.

As a result, in all samples except for the control, decomposition action of methylene blue is confirmed. Further, among these samples, the sample 3 exhibits the strongest decomposition action of methylene blue following the sample 6 and the sample 7. Due to such a result, at this stage, it is determined that the sol C liquid exhibits the strongest photocatalytic action. With respect to the titania coating applied to the titania fine fibers of the sample 6 and the sample 7, it is determined that titania coating mainly acquires a strong photocatalytic function due to the enlargement of a coating area of the fiber of the base material related to the diameter of the fiber.

### (9) Deodorization test

Next, to examine deodorization ability of a titania coating aluminum fiber aggregate which is obtained by applying titania coating to the aluminum fiber aggregate E-1 (hereinafter, referred to as titania coating E-1) and titania fiber aggregates respectively formed of the alumina fiber aggregate E-7 and the alumina fiber aggregate F-1 (hereinafter, respectively referred to as E- 7 titania fiber aggregate and F-1 titania fiber aggregate) attributed to the photocatalytic action, a test which discomposes acetaldehyde sealed in a hermetically-sealed vessel is performed.

First of all, the explanation is made with respect to the acetaldehyde decomposition test performed on the titania coating E-1 and E-7 titania fiber aggregate. In this test, as a comparison sample, a non-woven fabric (made by NB company) to which a photocatalytic function is imparted is also served for the test.

First of all, to remove extra components made of titanium oxide which are adhered to the fibers, ultrasonic cleaning is applied to the fiber aggregate served for the test for 5 minutes and the fiber aggregate is deionized using distilled water. Thereafter, the fiber aggregate is baked again at a temperature of 200°C for two hours.

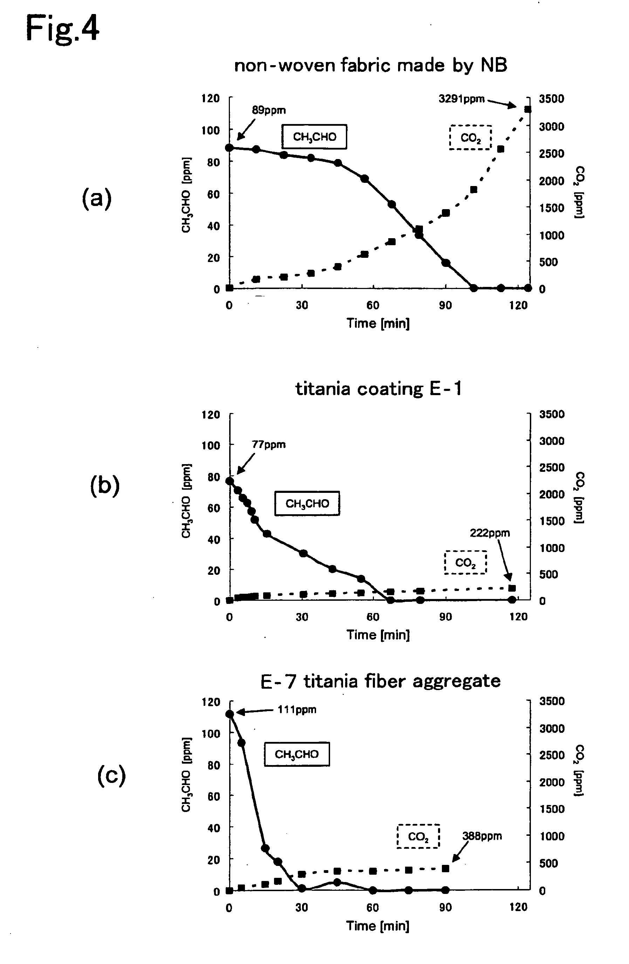

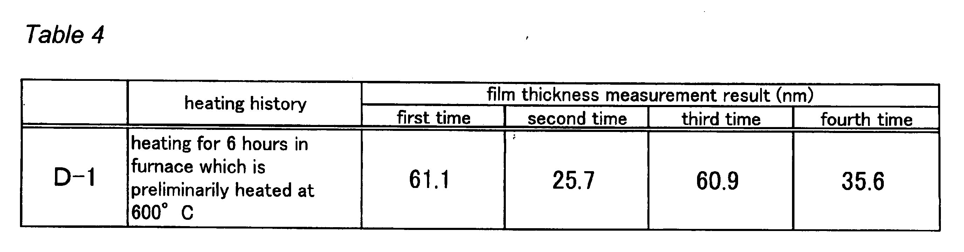

Here, test samples which are cut into a 50mm-square shape are accommodated in the glass-made hermetically-sealed vessel having a predetermined capacity. After confirming the test samples being in a steady state, ultraviolet rays are radiated to the test samples. In this case, changes with time of acetaldehyde concentration and carbon dioxide concentration in the inside of the vessel are measured using a gas chromatograph device (GC-8A type made by SHIMADZU CORPORATION). Data which is obtained by performing the deodorization test in this manner is shown in Fig. 4.

Fig. 4 (a) shows a result of the test of 2g of the non-woven fabric made by NB company, Fig. 4 (b) shows a result of the test of 2g of the titania coating E-1, and Fig. 4(c) shows a result of the test of 2.5g of E-7 titania fiber aggregate.

In the non-woven fabric shown in Fig. 4(a), for approximately 50 minutes after starting the test, a tendency in which the acetaldehyde concentration is slightly decreased is observed. Thereafter, the acetaldehyde concentration is sharply decreased, and assumes a value equal to or below a detection limit or less when 100 minutes lapses after starting the test.

Further, the carbon dioxide concentration is simultaneously increased with the starting of radiation of ultraviolet rays, and assumes 3291ppm, that is, a maximum value, at a point of time that 200 minutes lapse after starting the test.

With respect to the titania coating E-1 indicated by (b), the concentration of acetaldehyde is sharply lowered immediately after the radiation of ultraviolet rays and assumes a value equal to or below a substantially detection limit after a lapse of 75 minutes from starting of the radiation of ultraviolet rays. However, the concentration of carbon dioxide remains at 222ppm ever after a lapse of 120 minutes. To study this result, it is found that although the non-woven fabric to which the photo-catalyst is applied generates a large quantity of carbon dioxide simultaneously with the radiation of ultraviolet rays, the titania-coating E-1 fiber aggregate does not generate a large quantity of carbon dioxide in spite of the rapid dissipation of acetaldehyde. That is, it is found that acetaldehyde which is once absorbed in the titania layer formed by the above-mentioned titania coating due to the photocatalytic reaction is gradually decomposed. From this phenomenon, it is found that the titania coating fiber exhibits a light induced absorbing function. The E-1 fiber with no titania coating possesses neither an absorbing function nor the light induced absorbing function (not shown in the drawing) and hence, it is determined that this absorbing function derives from an intrinsic ability of this titania coating attributed to the compositions of respective sol A liquid, sol B liquid and sol C liquid.

With respect to titania coating E-7 indicated by (c), the concentration of acetaldehyde is sharply lowered immediately after the radiation of ultraviolet rays and assumes a value equal to or below a substantially detection limit after a lapse of 30 minutes from starting of the radiation of ultraviolet rays. Acetaldehyde which is absorbed once is gradually decomposed, and assumes a maximum 388ppm after a lapse of 90 minutes from starting of the radiation of ultraviolet rays. From this, it is found that by changing a base material of coating from aluminum fiber to alumina fiber, the photocatalytic action is remarkably increased thus increasing both of the light induced absorbing function and the decomposition.

This implies that the alumina fiber is not limited to the absorption of harmful substances. For example, even when a functional catalyst such as titanium oxide or platinum is carried by the alumina fiber, the alumina fiber can firmly hold the functional catalyst. That is, the alumina fiber and the alumina fiber aggregate according to the present invention have possibility of being used as the excellent catalytic base material.

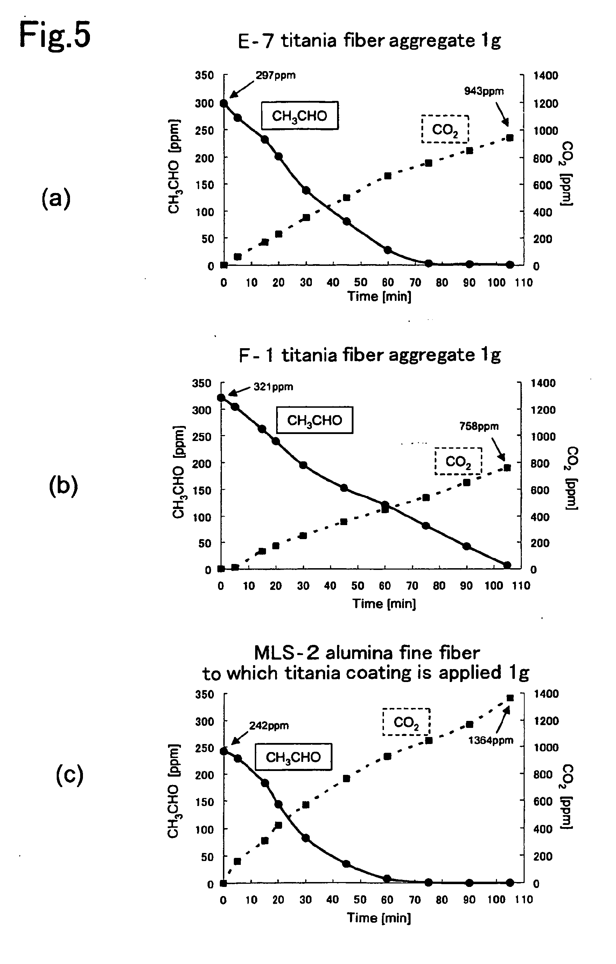

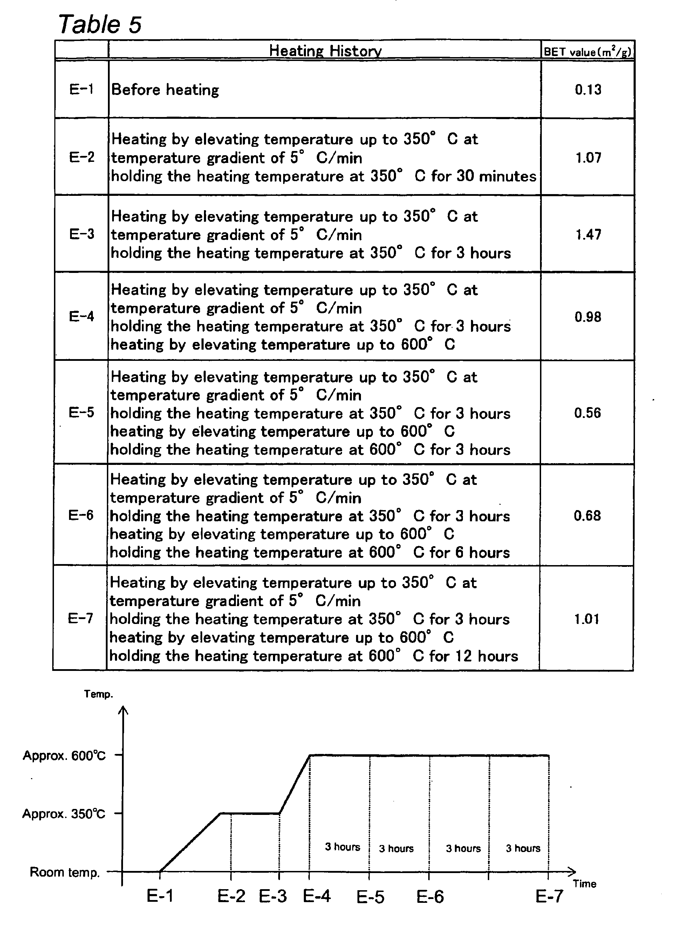

Subsequently, an acetaldehyde decomposition test is also performed with respect to the F-1 titania fiber aggregate. Further, alumina fine fibers (Maftec (registered trade mark) ALS) to which titania coating using the sol C liquid is applied is served for a test. Further, the concentration of acetaldehyde before the radiation of ultraviolet rays is approximately 250 to 350ppm in this embodiment so as to confirm the decomposition with respect to acetaldehyde of the concentration higher than the concentration of acetaldehyde in the previous test. Weights of respective specimens served for this test are set to 1g.
Sample 1: E-7 titania fiber aggregate
Sample 2: F-1 titania fiber aggregate to which Maftec (registered trade mark) ALS is bonded
Sample 3: titania coating to Maftec (registered trade mark) MLS-2 using sol C liquid
Fig. 5(a) shows a result of the test on a sample 1, Fig. 5(b) shows a result of the test on a sample 2, and Fig. 5(c) shows a result of the test on a sample 3. It is found from Fig. 5(a), Fig. 5(b) and Fig. 5(c), all samples have the excellent photocatalytic ability.

To focus on Fig. 5(a) first of all, this drawing shows that the E-7 titania fiber aggregate which is served for the previous test decomposes the substantially whole acetaldehyde within 75 minutes even under acetaldehyde of higher concentration and hence, the E-7 titania fiber aggregate has the strong acetaldehyde decomposing ability. Titania fiber has a large specific surface area with a BET value thereof set to 1.35m²/g. Further, in spite of the fact that the initial concentration of acetaldehyde is increased three times, a generation quantity of carbon oxide is small, and hence, it is suggested that the alumina fiber or the alumina fiber aggregate according to the present invention to which titania coating is applied exhibits the excellent substance absorbing ability.

Further, it is found that F-1 titania fiber aggregate shownin Fig.5(b) possesses the excellent photocatalyticability. A specific surface area of the F-1 titania fiber aggregate is 0.77 m²/g.

Further, as shown in Fig. 3(c), it is observed that the sample 3 is observed to possess the extremely excellent photocatalytic ability and hence, the dip coating with the previously mentioned sol C liquid uses the liquid which can be easily applicable to the ultra-fine fiber such as alumina fine fiber without selecting a fiber diameter of the fine fiber. Further, although Maftec (registered trade mark) MLS-2 contains approximately 28% of carbon dioxide, Maftec (registered trade mark) MLS-2 exhibits the high photocatalytic ability and hence, it is suggested that the favorable dip coating is applied to Maftec (registered trade mark) MLS-2. It is also suggested that the sol C liquid is a sol liquid which is applicable by dip coating to alumina containing silicon dioxide. A specific surface area of the sample 3 (MLS-2 alumina fine fiber to which titania coating is applied) is 9.31m²/g.

### (10) NOx decomposition test

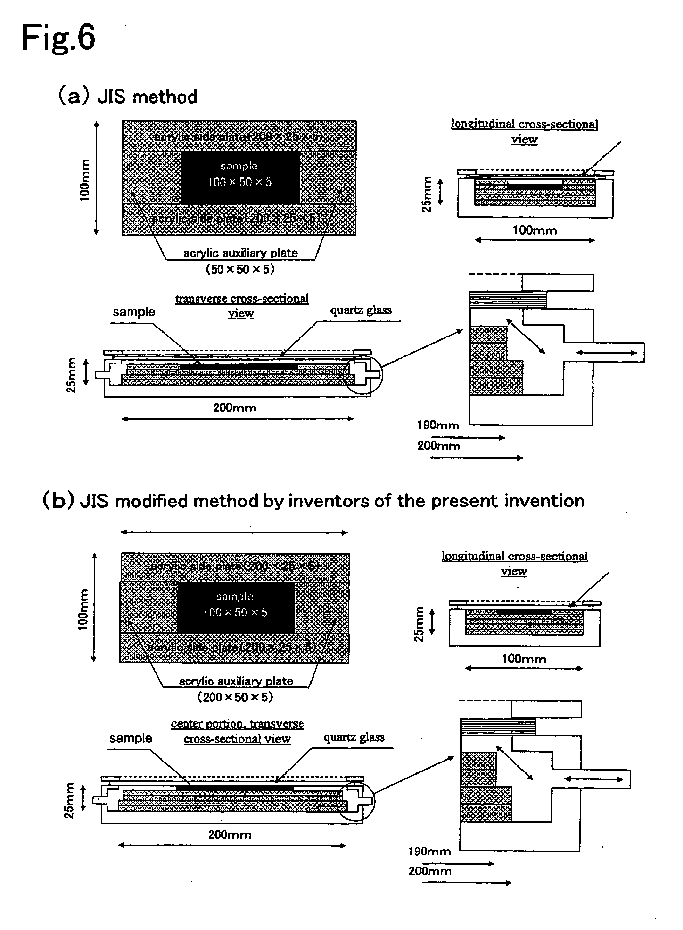

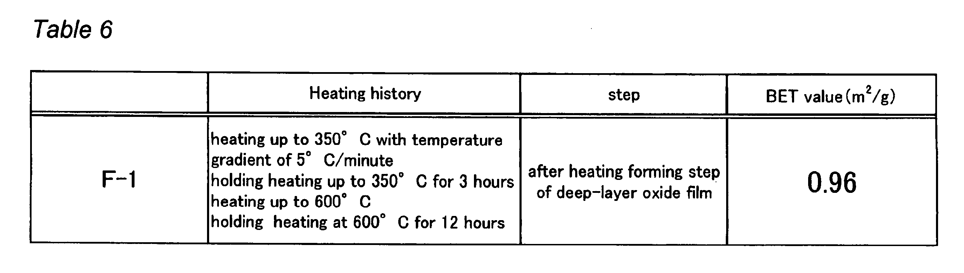

Next, the C-2 titania fiber aggregate or a comparison material is stored in a testing device shown in Fig. 6, and a NOx test is performed by supplying NO (carbon monoxide) to the testing device. This testing method is a method which inventors of the present invention originally have improved and is similar to a JIS method. Since the sample has the fiber shape and hence, the evaluation of the sample is performed by allowing NOx (carbon monoxide) to pass the inside of the fiber. Here, a testing device served for the JIS method is shown in Fig. 6 (a) and a JIS modified method which the inventors of the present invention tested is shown in Fig. 6(b).

As shown in Fig. 6(a), in this JIS method, only a change of NO gas which passes a surface of the fiber can be measured. On the other hand, in the E-7 titania fiber aggregate, the change of the NO gas is generated in the pore portions of the wire-wool-shaped fiber. Accordingly, it is impossible to perform the sufficient evaluation with the usual JIS method. Accordingly, the inventors of the present invention perform the evaluation of samples by applying the JIS modified method shown in Fig. 6(b) which is configured to allow the NO gas to pass the inside of the fiber aggregate.

In this test, in accordance with the JIS method, 1ppm of NO (nitrogen monoxide) is supplied to the sample from an upstream side of the testing device at a flow rate of 3.0L/min at a temperature of 2 5±2.0°C, the gas which reaches the downstream side of the testing device after passing the sample is analyzed by an NOx analyzer, and data is collected. Due to passing of gas through the sample, it is confirmed that there is no pressure loss in the inside of the circuit. In this test, the test which allows NO to pass the E-7 titania fiber aggregate without radiating ultraviolet rays and the test which allows NO to pass the E-7 titania fiber aggregate while radiating ultraviolet rays are performed.

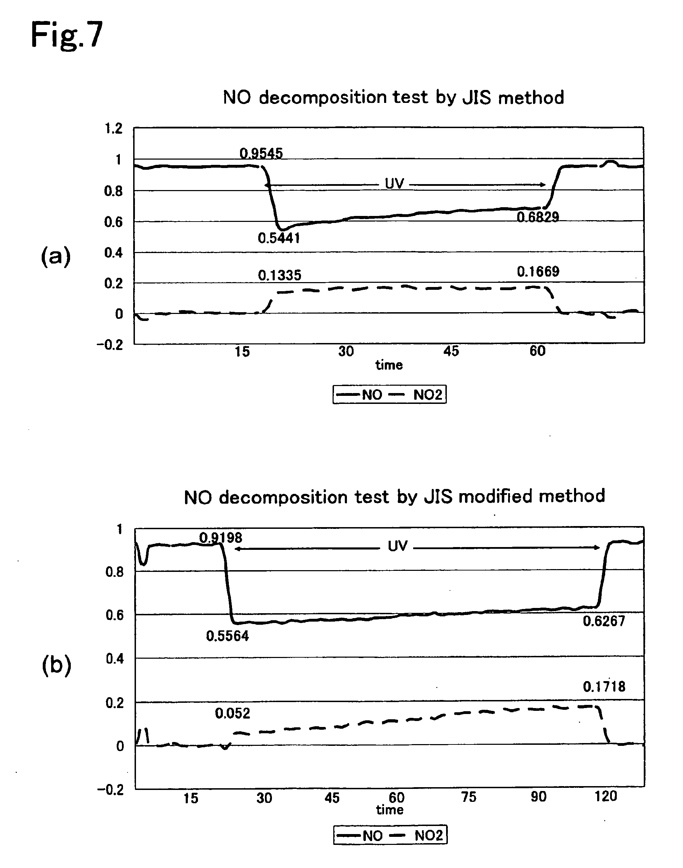

A result of the test is shown in Fig. 7. As can be understood from Fig. 7(a), the NO concentration of the gas is sharply reduced to 0.54ppm from 0.95ppm which is the concentration before starting the radiation of ultraviolet rays, and the NO concentration of the gas sampled downstream side of the device is heldat 0.68ppm even when the time exceeds 60 minutes. Next, the result of the evaluation after performing the JIS modified method is shown in Fig. 7(b). As can be understood from Fig. 7(b), the NO concentration of the gas at the time of starting the radiation of ultraviolet rays is 0.54ppm, and the NO concentration of the gas is maintained at 0.62ppm even after a lapse of 120 minutes. On the other hand, it is understood that the NO₂ concentration is decomposed to 28% of the NO concentration.

Next, to compare the NO decomposition action of the E-7 titania fiber aggregate to which the dip coating is applied three times at the time of performing the titania coating and the NO decomposition action of the E-7 titania fiber aggregate to which the dip coating is applied four times at the time of performing the titania coating, the NO decomposition test is performed.

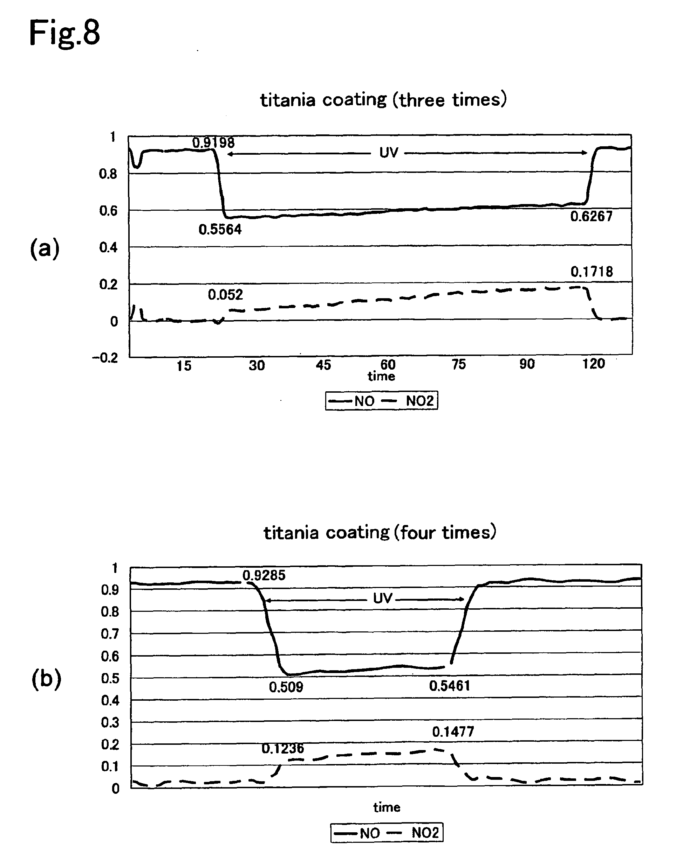

Fig. 8(a) shows a test result of the NO decomposition test of the E-7 titania fiber aggregate to which the dip coating is applied three times, and Fig. 8(b) shows a test result of the NO decomposition test of the E-7 titania fiber aggregate to which the dip coating is applied four times.

As a result, while the concentration of NO gas is reduced to approximately 0.56ppm from approximately 0.92ppm due to the radiation of ultraviolet rays in Fig. 8(a), the concentration of NO gas is reduced to approximately 0.51ppm from approximately 0.93ppm due to the radiation of ultraviolet rays in Fig. 8 (b).

From this, it is found that it is possible to generate a further favorable photocatalytic action by performing the dip coating a large number of times.

(11) Example in which titania fiber or titania fiber aggregate is applied to the sterilization, insecticide, decomposition of organic substances in water.
The titania fiber or the titania fiber aggregate is made to function as a photocatalyst which generates environment improving ions which are referred to as so-called minus ions or ion clusters such as radical groups of OH⁻ or O⁻.

That is, for example, the titania fiber or the titania fiber aggregate can perform oxidizing and decomposing treatment of harmful substances in gas such as acetaldehyde, formaldehyde, xylene, toluene, styrene, hydrogen sulfide, methyl mercaptan, methyl sulfide, trimethylamine, isovaleric acid, ammonia, nitrogen oxide, sulfur oxide, for example, and, at the same time, can be used for the sterilization of bacteria and viruses.

However, a reaction in such a gas phase is held for an extremely short time due to instability of the reaction, and the reaction is a reaction which occurs in extreme vicinity of the photocatalyst and hence, the decomposition treatment of the harmful substances and the sterilization of bacteria and the like are limited to a case in which the harmful substances are in contact with a surface of the photocatalyst.

Then, if it is possible to impart the function of active oxygen species which the environment improving ions possess to water and to make use of this oxidizing reaction, even when the harmful substances are remote from the surface of the photocatalyst, it is possible to make the strong oxidizing action attributed to the active oxygen species at portions remote from the surface of the photocatalyst in time and space. This water contains a large quantity of active oxygen species generated by the photocatalytic reaction and hence, such water is defined as photocatalytic reaction water.

That is, as the photocatalytic reaction water generating device according to the present invention, there is provided a photocatalytic reaction water generating device which can perform cleaning by making use of an oxidizing reaction which uses the photocatalytic reaction water. Here, cleaning implies, not to mention removing smears adhered to the substance, a concept such as the sterilization of microorganism or the oxidizing decomposition of organic materials.

The photocatalytic reaction water is generated by bringing water into contact with titania fiber aggregate and by radiating ultraviolet rays to the titania fiber aggregate. Here, a ray source of ultraviolet ray is not particularly limited and may be any ray source which can radiate ultraviolet rays of 340nm to 370nm such as an ultraviolet ray lamp (black light), an LED or sunbeams.

Further, in radiating the ultraviolet rays to the photocatalyst in water, the ultraviolet rays radiated from the ultraviolet ray source above water are introduced into water by way of an optical fiber and, at the same time, an end portion of the optical fiber is made to face the photocatalyst and hence, the ultraviolet rays can be radiated to a desired portion of the photocatalyst. Further, even when water is smeared, by introducing the ultraviolet rays into water using the optical fiber, it is possible to easily allow the ultraviolet rays to reach the photocatalyst.

The dissolved oxygen concentration of water for producing photocatalytic reaction water by bringing the water into contact with the photocatalyst may be preliminarily increased. The higher the dissolved oxygen concentration of water, the more the photocatalytic reaction water on the surface of the titania fiber aggregate is activated and hence, a large quantityof active oxygen species is generated thus efficiently producing the photocatalytic reaction water.

Further, in generating the photocatalytic reaction water, at a position where ultrasonic waves reach, an ultrasonic vibrator which can oscillate in water may be provided. Due to the vibrations of the titania fiber caused by ultrasonic waves, it is possible to efficiently diffuse active oxygen species generated on the surface of the titania fiber into water. That is, the titania fiber aggregate which constitutes the photocatalyst is an aggregate of a large number of titania fibers thus forming a porous body and hence, the titania fiber aggregate possesses an extremely large surface area whereby a large quantity of active oxygen species is generated. Further, simultaneously with the generation of active oxygen species, the generated active oxygen species are readily removed from the surface of the titania fiber aggregate by vibrations due to the vibrations of ultrasonic waves and a large quantity of removed active oxygen species floats in water. Further, new active oxygen species are instantaneously generated and are removed again due to the ultrasonic vibrations and float in water again. Since this operation is repeated many times during a moment, it is possible to allow water to extremely efficiently contain active oxygen species therein. Further, the titania fiber aggregate has a large number of free fiber ends and it is possible to diffuse a large quantity of active oxygen species by vibrating these free fiber ends.

Along with such structure, in the titania fibers which form the titania fiber aggregate, an aluminum layer made of aluminum-based metal, an alumina layer which includes a natural oxide film, an artificial oxide film and a deep-layer oxide film, and a titania layer which is formed by using a sol A liquid, a sol B liquid or a sol C liquid are firmly bonded to each other and hence, the titania fiber aggregate exhibits high durability whereby the titania fiber aggregate can withstand the use thereof for a long period while maintaining practical utility even in water under the ultrasonic wave environment.

The photocatalytic reaction water generated in such a manner is effective for disinfection cleaning of goods, foods and organisms and, at the same time, a strong acidity of the photocatalytic reaction water is used for an anti-parasitic operation of marine organisms or an anti-parasitic operation of amoeba.

(12) Example in which titania fiber aggregate is applied to a filter of an air purifier.

Conventionally, a gas (for example, a harmful gas such as formaldehyde or laughter gas (N₂O)) is constantly discharged from an experiment and research room, an operation room of a hospital, a factory, an excrement storage place or the like. However, it has been pointed out that the gas adversely influences not only a human health by bringing about a health problem such as chronic neurologic disease, liver disease, teratogenicity or carcinogenicity but also an environment by bringing about global warming or the ozone layer depletion. Accordingly, it is urgently necessary to cope with such drawbacks.

Further, the gas treatment system includes a water supply portion which supplies water to the gas treatment filter, and a water filter is formed on a surface of the gas treatment filter, and the gas treatment filter includes the alumina fiber aggregate or the titania fiber aggregate.

Agas treatment systemA is specifically explained in conjunction with drawings.

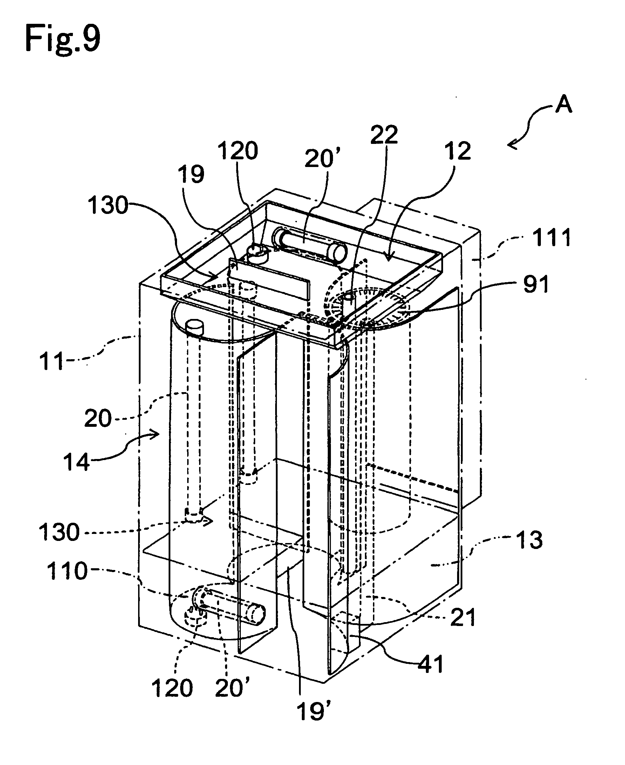

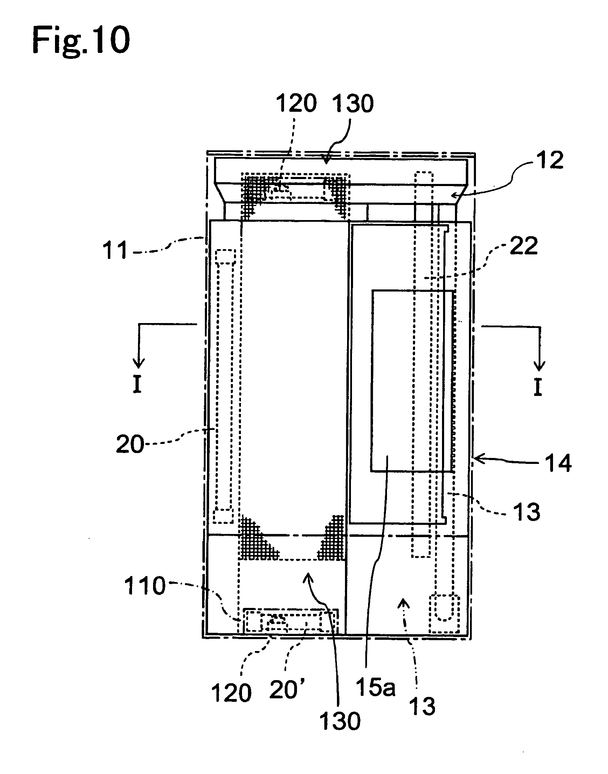

As shown in Fig. 9 and Fig. 10, the gas treatment system A mounts a first water tank 12 on an upper portion of a casing 11, stores water in a lower portion in the inside of the casing 11, wherein the lower portion is referred to as a second water tank 13. Both water tanks 12, 13 store water for forming a water filter F described later. Further, the water filter F is formed of the alumina fiber aggregate or the titania fiber aggregate.

Between the first water tank 12 and the second water tank 13, a water supply pipe 21 is provided as a water supply means. Water stored in the inside of the second water tank 13is pumped up by a water supply pump 41 which is arranged in the inside of the second water tank 13 as a water supply means in the same manner as the water supplypipe 21 and is sucked up and is supplied to the first water tank 12 by way of the water supply pipe 21.

Here, as shown in Fig. 10, in the inside of the first water tank 12 and the second water tank 13, a photocatalyst portion 130 is formed by arranging a gas treatment filter which includes the titania fiber aggregate and, at the same time, an ultrasonic vibrator 120 which is connected with an ultrasonic wave generator (not shown in the drawing) and an ultraviolet ray lamp 20' are arranged in the inside of the first water tank 12 and the second water tank 13. Accordingly, it is possible to decompose harmful substances caught by the water filter and the sterilization of bacteria generated in the water filter system. Ultraviolet rays served for radiation may not be limited only to ultraviolet rays from a blacklight (wavelength: approximately 340nm to 370nm) but also may be ultraviolet rays from a sterilizing lamp (wavelength: approximately 260mm).

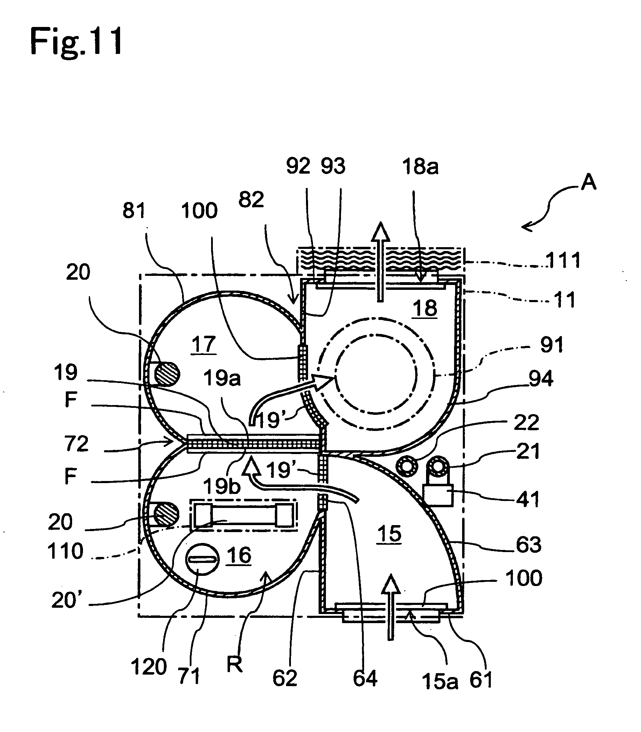

In the gas flow passage portion 14, as shown in Fig. 11, a flow passage R which allows a gas to flow by way of an air supply passage 15 → a mirror face air-blow chamber 16 → a mirror face air exhaust chamber 17 → an air exhaust passage 18 → a carbon fiber accommodating chamber 111 is formed. By mounting the above-mentioned exhaust port 18a in the carbon fiber accommodating chamber 111, using active carbon fibers as a catalyst and an absorbent, harmful substances in the gas which cannot be treated in the above-mentioned gas flow passage portion 14 (for example, a nitrogen compound in the organic gas) is subject to absorption and reduction treatment in the inside of the carbon fiber accommodating chamber 111 and, thereafter, the gas is exhausted thus enhancing the gas treatment efficiency.

In this manner, by radiating the ultraviolet rays to the gas treatment filter 19 which is formed by applying titania coating to the alumina fiber, it is possible to perform the gas treatment using not only the active oxygen species generated on the surface of the gas treatment filter 19 but also photocatalytic reaction water generated in the inside of the upper and lower tanks as a medium.

Accordingly, different from the conventional method which treats only harmful substances which are brought into contact with the surface of the photocatalyst by directly bringing the active oxygen species generated by the photocatalyst (titania coating) on the surface of the gas treatment filter 19 to the harmful substances without using a medium, the present invention can enjoy the gas treatment effect by the active oxygen species even at a place remote from the photocatalyst.

The same goes for splashes of water containing the active oxygen species which are diffused in an aerosol state in the inside of a flow passage R of the gas treatment system A. Even when the harmful substances to be treated are not brought into direct contact with the gas treatment filter, the oxidizing decomposition ability is imparted to fine water droplets which are present in the inside of the flow passage R and hence, the gas treatment efficiency can be remarkably enhanced.

Further, in the first water tank 12, for example, a calcium carbonate containing material (not shown in the drawing) which contains calcium carbonate (CaCO₃) such as baked coral or Ryukyu limestone may be arranged so as to convert water in the inside of the first water tank 12 into a calcium carbonate solution.

Further, urea may be added to water in the inside of the first water tank 12.

Accordingly, it is possible to maintain the absorption ability of water filter F by suitably forming harmful substances in the gas into gypsum by while further enhancing the absorption ability of the water filter F.

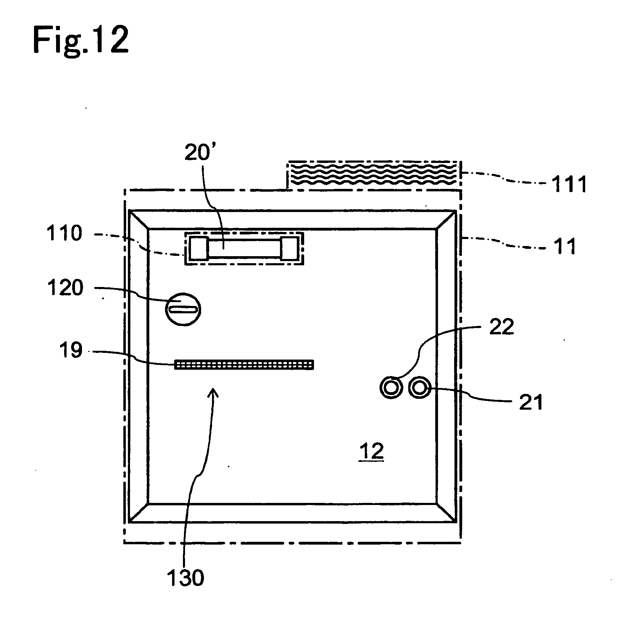

Here, in Fig. 9 to Fig. 12, symbol 15a indicates an air intake port, symbol 19a indicates a front surface, symbol 19b indicates a rear surface, symbol 20a indicates a rear surface, symbol 21 indicates a water supply pipe, symbol 22 indicates a water discharge pipe, symbol 41 indicates a water supply pump, symbol 61 indicates an air-discharge-passage front wall, symbol 62 indicates an air-discharge-passage left wall, symbol 63 indicates an air-discharge-passage peripheral wall , symbol 64 indicates a first connecting portion, symbol 71 indicates a mirror-surface-air-supply-chamber peripheral wall, symbol 72 indicates a second connecting portion, symbol 81 indicates a mirror-surface-air-discharge-chamber peripheral wall, symbol 82 indicates a third connecting portion, symbol 91 indicates a fan, symbol 92 indicates an air-discharge-passage rear wall, symbol 93 indicates an air-discharge-passage left wall, symbol 94 indicates an air-discharge-passage peripheral wall, and numeral 100 indicates a ultraviolet ray reflection aluminum panel.

As described above, according to the alumina coating film forming method of the present invention, the alumina fiber having the thick oxide film coating can be formed. Further, it is possible to provide the alumina fiber having the excellent heat resistance and the excellent dip coating property. Further, it is possible to provide the alumina fiber which is formed by collecting the aluminum fibers in a steel-woven shape and the alumina fiber to which the photocatalytic function is imparted by applying dip coating. Further, by making use of the alumina fiber having at least either one of the excellent material absorbing function and the excellent photocatalytic function attributed to the thick oxide film applied to the alumina fiber, it is possible to realize the air purifying system which possesses the excellent material removing ability.

Finally, although the explanation has been made heretofore with respect to the respective embodiments, it is needless to say that these embodiments merely constitute one example of the present invention and the present invention is not limited to the above-mentioned embodiments. That is, various modifications are conceivable depending on designs or the like without departing from the gist of the technical concept of the present invention. For example, in the air purifying system A shown in Fig. 9 to Fig. 12, only one gas treatment filter 19 which uses the titania fiber aggregate is shown, the present invention is not limited to such a case and, for example, the air purifying system A may include a plurality of gas treatment filters 19'.

### Industrial Applicability

According to the method for forming an alumina coating film described in claim 1, the aluminum fiber made of aluminum or aluminium alloy which has the surface thereof covered with the natural oxide film is prepared, the artificial oxide film is formed below the natural oxide film, and the deep-layer oxide film which is formed by oxidizing aluminum is further formed below the artificial oxide film.

Due to such a constitution, the artificial oxide film and the deep-layer oxide film can be continuously formed in the lower-layer direction of the natural oxide film which covers the surface of the aluminum fiber. Accordingly, the oxide film can acquire the three-layered structure thus enabling the formation of the oxide film to which coating having high adhesive property such as photocatalyst titania coating is applied. Further, using the deep-layer oxide film as a heat-resistant film, it is possible form the deepest-layer oxide film described later by heating the aluminum fiber up to the melting point or more.

Further, in the method for forming an alumina thin film described in claim 1, the artificial oxide film is formed by heating the aluminum fiber up to the temperature approximately half of melting point of aluminum while maintaining a temperature gradient of approximately 5°C or less per minute and, thereafter, by maintaining the temperature approximately half of the melting point for a predetermined time. Accordingly, the presence of irregularities in film thickness of the deep-layer oxide film can be prevented thus enabling the formation of the alumina thin film having the desired film thickness.

Further, in the method for forming an alumina thin film described in claim 1, by setting the film thickness of the oxide film consisting of the natural oxide film and the artificial oxide film to 5nm or more, it is possible to form the firm oxide film thus enhancing the weather resistance, the corrosion resistance and the stability of the fiber.

Further, in the method for forming an alumina thin film described in claim 1, the film thickness of the oxide film consisting of the natural oxide films, the artificial oxide film and the deep-layer oxide film is set to 50nm or more. Accordingly, it is possible to form the alumina fiber which possesses the flexibility intrinsic to aluminum and, at the same time, can maintain the fiber shape even when the heating temperature exceeds the melting point of aluminum. Further, it is possible to form the oxide film to which coating having high adhesive property such as photocatalyst titanic coating can be applied. Still further, it is possible to form the alumina thin film which can withstand heat resistance capable of withstanding the heat ing temperature (approximately 750°C) necessary for forming the film for the rutile-type photocatalytic titania fiber.

Further, in the method for forming an alumina thin film described in claim 1, the deep-layer oxide film is formed by heating the aluminum fiber up to the temperature close to the melting point of aluminum corresponding to a desired film thickness and, thereafter, by adjusting the time for holding the aluminum fiber around the temperature. Accordingly, the film thickness of the deep-layer oxide film can be adjusted.

Further, in the method for forming an alumina thin film described in claim 2, the despest-layer oxide film is formed by oxidizing aluminum below the deep-layer oxide film by heating the aluminum fiber up to the temperature which exceeds a melting point of the aluminum fiber. Accordingly, it is possible to form the alumina thin film which can withstand heat resistance capable of withstanding the heating temperature (approximately 750°C) necessary for forming the film for the rutile-type photocatalytic titania fiber.

## Claims

1. A method for forming an alumina coating film on an aluminum fiber made of aluminum or aluminum alloy, the method comprising the steps of
preparing an aluminum fiber made of aluminum or aluminum alloy which has a surface thereof covered with a natural oxide film,
forming an artificial oxide film below the natural oxide film by heating the aluminum fiber up to a temperature approximately half of melting point of aluminum while maintaining a temperature gradient of approximately 5°C or less per minute and, thereafter, by maintaining the temperature at approximately half of the melting point for a predetermined time,
wherein the film thickness of the oxide film consisting of the natural oxide film and the artificial oxide film is 5nm or more,
and forming a deep-layer oxide film below the artificial oxide film by heating the aluminum fiber up to a temperature close to the melting point of aluminum and, thereafter, by adjusting a time for holding the aluminum fiber around the temperature corresponding to a desired film thickness,
wherein the film thickness of an oxide film consisting of the natural oxide film, the artificial oxide film and the deep-layer oxide film is 50nm or more

2. A method for forming an alumina coating film according to claim 1, comprising further the step of forming a deepest-layer oxide film by oxidizing aluminum below the deep-layer oxide film by heating the aluminum fiber up to a temperature which exceeds the melting point of the aluminum fiber.

## Patentansprüche

1. Verfahren zur Bildung eines Aluminiumoxid-Beschichtungsfilms auf einer Aluminiumfaser aus Aluminium oder Aluminiumlegierung, wobei das Verfahren die folgenden Schritte umfasst:
Herstellen einer Aluminiumfaser aus Aluminium oder Aluminiumlegierung, die eine mit einem natürlichen Oxidfilm bedeckte Oberfläche aufweist,
Bilden eines künstlichen Oxidfilms unter dem natürlichen Oxidfilm durch Erhitzen der Aluminiumfaser bis zu einer Temperatur von etwa der Hälfte des Schmelzpunktes von Aluminium, wobei ein Temperaturgradient von etwa 5°C oder weniger pro Minute aufrechterhalten wird, und durch anschließendes Aufrechterhalten der Temperatur bei etwa der Hälfte des Schmelzpunktes für eine vorbestimmte Zeit,
wobei die Filmdicke des Oxidfilms, der aus dem natürlichen Oxidfilm und dem künstlichen Oxidfilm besteht, 5 nm oder mehr beträgt,
und Bilden einer tiefer liegenden Oxidfilmschicht unter dem künstlichen Oxidfilm durch Erhitzen der Aluminiumfaser bis zu einer Temperatur in der Nähe des Schmelzpunktes von Aluminium und durch anschließendes Einstellen einer Zeit zum Halten der Aluminiumfaser in der Nähe der Temperatur, die einer gewünschten Filmdicke entspricht,
wobei die Filmdicke des Oxidfilms, der aus dem natürlichen Oxidfilm, dem künstlichen Oxidfilm und der tiefer liegenden Oxidfilmschicht besteht, 50 nm oder mehr beträgt.

2. Verfahren zur Bildung eines Aluminiumoxid-Beschichtungsfilms gemäß Anspruch 1, ferner umfassend den Schritt des Bildens einer am tiefsten liegenden Oxidfilmschicht durch Oxidieren des Aluminiums unter der tiefer liegenden Oxidfilmschicht mittels Erhitzen der Aluminiumfaser bis zu einer Temperatur, die den Schmelzpunkt der Aluminiumfaser übersteigt.

## Revendications

1. Procédé pour former un film de revêtement d'alumine sur une fibre d'aluminium faite d'aluminium ou d'un alliage d'aluminium, le procédé comprenant les étapes de
préparation d'une fibre d'aluminium faite d'aluminium ou d'un alliage d'aluminium qui a une surface de celle-ci recouverte d'un film d'oxyde naturel,
formation d'un film d'oxyde artificiel au-dessous du film d'oxyde naturel en chauffant la fibre d'aluminium jusqu'à une température approximativement égale à la moitié du point de fusion de l'aluminium tout en maintenant un gradient de température d'approximativement 5 °C ou moins par minute et, après cela, en maintenant la température à approximativement la moitié du point de fusion pendant un temps prédéterminé,
dans lequel l'épaisseur de film du film d'oxyde constitué par le film d'oxyde naturel et par le film d'oxyde artificiel est de 5 nm ou plus,
et formation d'un film d'oxyde en couche profonde au-dessous du film d'oxyde artificiel en chauffant la fibre d'aluminium jusqu'à une température proche du point de fusion de l'aluminium et, après cela, en ajustant un temps pour maintenir la fibre d'aluminium autour de la température correspondant à une épaisseur de film souhaitée,
dans lequel l'épaisseur de film d'un film d'oxyde constitué par le film d'oxyde naturel, le film d'oxyde artificiel et le film d'oxyde en couche profonde est de 50 nm ou plus.

2. Procédé pour former un film de revêtement d'alumine selon la revendication 1, comprenant en outre l'étape de formation d'un film d'oxyde en couche la plus profonde en oxydant l'aluminium au-dessous du film d'oxyde en couche profonde en chauffant la fibre d'aluminium jusqu'à une température qui dépasse le point de fusion de la fibre d'aluminium.
